# EUROPÄISCHE PATENTSCHRIFT

(11) **EP 1 999 448 B1**
(45) Veröffentlichungstag und Bekanntmachung des Hinweises auf die Patenterteilung: **28.12.2011**
(21) Anmeldenummer: 07727355.5
(22) Anmeldetag: 26.03.2007
(51) Int. Cl.: G01M 17/02

(54) **VORRICHTUNG UND VERFAHREN ZUM PRÜFEN EINES REIFENS, INSBESONDERE MITTELS EINES INTERFEROMETRISCHEN MESSVERFAHRENS**
DEVICE AND METHOD FOR INSPECTING A TYRE, IN PARTICULAR USING AN INTERFEROMETRIC MEASURING METHOD
DISPOSITIF ET PROCÉDÉ POUR VÉRIFIER UN PNEUMATIQUE, NOTAMMENT AU MOYEN D'UN PROCÉDÉ DE MESURE INTERFÉROMÉTRIQUE

(30) Priorität: 27.03.2006 DE 102006014070
(43) Veröffentlichungstag der Anmeldung: 10.12.2008
(60) Teilanmeldung: 11184175.5
(73) Patentinhaber: Mähner, Bernward, 82205 München (DE)
(72) Erfinder: Mähner, Bernward, 82205 München (DE)
(74) Vertreter: Schober, Christoph D.
(86) Internationale Anmeldenummer: PCT/EP2007/052882
(87) Internationale Veröffentlichungsnummer: WO 2007/110414

(56) Entgegenhaltungen:
- EP-A- 1 500 917
- EP-A2- 0 440 418
- DE-A1- 4 228 702
- US-A- 6 073 058
- US-A1- 2001 040 682

## Beschreibung

Die Erfindung betrifft eine Vorrichtung zum Prüfen eines Reifens, insbesondere mittels eines interferometrischen Messverfahrens. Die Vorrichtung ist mit einem Messkopf versehen, durch den der Reifen zum Erzeugen eines Messergebnisses abtastbar ist. Darüber hinaus ist die Vorrichtung mit einem Positionierungsmittel versehen, durch das der Messkopf in einer Beobachtungsposition positionierbar und in einer Beobachtungsrichtung ausrichtbar ist. Mit Hilfe von einer Steuer- und Anzeigeeinrichtung ist das Positionierungsmittel steuerbar und das Messergebnis anzeigbar. Die Erfindung bezieht sich ferner auf ein Verfahren zum Prüfen eines Reifens, bei dem eine solche Vorrichtung Anwendung finden kann.

Reifen werden zur Qualitätskontrolle und zur Reduzierung von Sicherheitsrisiken einer Werkstoffprüfung unterzogen, die es ermöglicht, fehlerhafte Stellen, so genannte Fehlstellen, zu erkennen. Vor allem dann, wenn es sich um benutzte Reifen handelt, die runderneuert werden sollen, wird in der Regel eine zerstörungsfreie Werkstoffprüfung angewendet, die eine vergleichsweise schnelle Reihenuntersuchung gewährleistet. Häufig anzutreffen in der industriellen Praxis sind optische Messverfahren, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüflings darstellt. Um das auf Grund der zunehmenden Verbreitung von elektronischen Bildsensoren, wie zum Beispiel so genannte CCD-Sensoren, heutzutage in der Regel digitale Ergebnisbild zu erzeugen, ist es demzufolge erforderlich, den Zustand des Prüflings zwischen zwei Messungen durch Einwirkung einer mechanischen, thermischen oder pneumatischen Kraft zu verändern. Vorrichtungen zum Prüfen von Reifen, wie sie beispielsweise aus der DE 199 44 314 A1 bekannt sind, weisen aus diesem Grund eine Druckkammer auf, die entweder evakuiert oder mit Druck beaufschlagt wird, so dass sich der in der Druckkammer befindende Reifen infolge der Druckänderung verformt und damit von einem ersten Referenzzustand in einen zweiten Messzustand übergeht.

Im Unterschied zu der Holographie ermittelt die Shearographie nicht die Verformung an der Oberfläche eines Prüflings, sondern misst den Gradienten der Verformung. Dies ist darauf zurückzuführen, dass für die Shearographie ein so genanntes Shearingelement Anwendung findet, bei dem es sich um eine eine Bildverdopplung erzeugende Shearoptik, wie zum Beispiel ein optischer Keil, ein optisches Biprisma oder ein Michelson-Interferometer, handelt. Auf Grund des Shearingelements entstehen zwei geringfügig räumlich versetzte Bilder von dem Prüfling, die überlagert werden, um auf Grund der sich auf diese Weise ergebenden Interferenz ein Interferogramm zu erzeugen. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüflings geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, werden in der DE 42 31 578 A1 und EP 1 014 036 B1 beschrieben. In der EP 1 500 917 werden Reifen vollautomatisch mittels interferometrischen Messverfahrens überpruft.

Ein Reifenprüfgerät, bei dem ein zu prüfender Reifen ohne Felge und Radscheibe in einer liegenden Position in einer Druckkammer angeordnet wird, offenbart die DE 199 44 314 A1. Das Reifenprüfgerät weist einen verstellbar angeordneten Messkopf auf, der sich in einem vorgegebenen Abstand von der inneren Umfangsfläche, der inneren Seitenfläche oder der äußeren Seitenfläche des Reifens positionieren lässt, um den Unterbau des Reifens, das heißt die Karkasse, einen häufig zwischen der Karkasse und der Lauffläche angeordneten Gürtel sowie die Seitenwand des Reifens zu prüfen. Der Messkopf weist eine Vielzahl an Beleuchtungseinheiten und Bildaufnahmeeinheiten auf, die unterschiedliche Abschnitte des Reifens gleichzeitig prüfen, um eine vergleichsweise schnelle Prüfung zu erreichen.

Die Bildaufnahmeeinheit des Messkopfs ist üblicherweise eine Kamera, die mit einem lichtempfindlichen Halbleitersensor, zum Beispiel einem CCD- oder CMOS-Sensor, versehen ist. Um ein aussagekräftiges Messergebnis zu erhalten, ist es erforderlich, das Gesichtsfeld der Kamera und den zu prüfenden Abschnitt des Reifens auf einander abzustimmen. Gewöhnlich erfolgt eine solche Abstimmung dadurch, dass der Messkopf in einer Beobachtungsposition positioniert und in einer Beobachtungsrichtung ausgerichtet wird, die sicherstellen, dass einerseits der gewählte Messabschnitt des Reifens vollständig im Gesichtsfeld der Kamera liegt und andererseits aufeinanderfolgende Messabschnitte sich ausreichend überlappen, um eine lückenlose Prüfung zu ermöglichen. Die Beobachtungsposition und die Beobachtungsrichtung des Messkopfs hängen von den Abmessungen des Reifens ab. Demzufolge sind aus der EP 1 284 409 A1 und DE 103 33 802 A1 Vorrichtungen bekannt, die es ermöglichen, den Reifen optisch, beispielsweise mittels so genannter Lichtschnitte, zu vermessen, um in Abhängigkeit von den auf diese Weise gewonnenen Daten den Messkopf zu positionieren und auszurichten. Nachteilig hierbei ist der gerätetechnische Aufwand, der für die Vermessung des Reifens erforderlich ist.

Vor allem dann, wenn Reifen eines bestimmten Typs einer Reihenuntersuchung unterzogen werden, genügt es daher meistens, die typenspezifischen Abmessungen des Reifens und die diesen zugeordneten Parameter des Messkopfs in einem Prüfprogramm zu hinterlegen, das für die Prüfung des jeweiligen Reifentyps in einen Speicher der Steuer- und Anzeigeeinrichtung geladen wird. Die Parameter des Messkopfs, das heißt die Beobachtungsposition und die Beobachtungsrichtung, müssen auf diese Weise zwar nur ein einziges Mal für einen bestimmten Reifentyp festgelegt werden, hängen aber von einem Bezugssystem ab, das von dem Positionierungsmittel der Prüfvorrichtung bestimmt wird. Folglich ist es nicht möglich, die reifenspezifischen Prüfprogramme für Prüfvorrichtungen mit unterschiedlichen Positionierungsmitteln zu verwenden.

Darüber hinaus ist die Kenntnis von den Parametern des Messkopfs in der Regel unentbehrlich, um das gewonnene Messergebnis auszuwerten. Denn handelt es sich bei dem Messergebnis um beispielsweise ein Ergebnisbild, das Interferenzlinien oder Phasendifferenzwinkeln zwischen zwei zeitlich versetzten Zuständen des geprüften Reifens zeigt, wie es beispielsweise aus der EP 1 014 036 B1 bekannt ist, dann vermittelt das Ergebnisbild dem Betrachter in den meisten Fällen keine Anhaltspunkte, die auf die räumliche Lage des dem Ergebnisbild zugeordneten Messabschnitts und damit einer in dem Ergebnisbild dargestellten Fehlstelle schließen lassen.

Der Erfindung liegt die Aufgabe zugrunde, eine Vorrichtung und ein Verfahren zum Prüfen eines Reifens zu schaffen, durch die sich eine einfache Steuerung des Messkopfs und eine zuverlässige Auswertung des Messergebnisses erzielen lassen.

Diese Aufgabe wird durch eine Vorrichtung gemäß Anspruch 1 und ein Verfahren gemäß Anspruch 9 gelöst. Bevorzugte Ausgestaltungen der Vorrichtung und des Verfahrens zum Prüfen eines Reifens werden in den Ansprüchen 2 bis 8 und 10 bis 15 definiert.

Die erfindungsgemäße Vorrichtung zum Prüfen eines Reifens ist mit einem Messkopf versehen, durch den der Reifen zum Erzeugen eines Messergebnisses abtastbar ist. Der Messkopf hat zum Beispiel eine Ausgestaltung, wie sie in der EP 1 014 036 B1 beschrieben ist, um den Reifen mittels eines interferometrischen Messverfahrens zu prüfen. Die erfindungsgemäße Vorrichtung ist ferner mit einem Positionierungsmittel versehen, durch das der Messkopf in einer Beobachtungsposition positionierbar und in einer Beobachtungsrichtung ausrichtbar ist. Mit Hilfe von einer Steuer- und Anzeigeeinrichtung lässt sich das beispielsweise über zwei Translationsfreiheitsgrade und zwei Rotationsfreiheitsgrade verfügende Positionierungsmittel steuern und das beispielsweise in Form eines Ergebnisbilds vorliegende Messergebnis anzeigen. Die Steuer- und Anzeigeeinrichtung weist wenigstens ein Anzeigefeld auf, mittels dem die Beobachtungsposition und/oder die Beobachtungsrichtung des Messkopfs in Bezug auf den Reifen angezeigt werden.

Das erfindungsgemäße Verfahren zum Prüfen eines Reifens weist folgende Verfahrensschritte auf:
a) ein Messkopf wird mittels eines Positionierungsmittels in einer Beobachtungsposition positioniert und in einer Beobachtungsrichtung ausgerichtet;
b) der Reifen wird mittels des Messkopfs zum Erzeugen eines Messergebnisses abgetastet;
c) mittels einer Steuer- und Anzeigeeinrichtung wird das Positionierungsmittel gesteuert und das Messergebnis angezeigt; und
d) die Beobachtungsposition des Messkopfs und/oder die Beobachtungsrichtung des Messkopfs werden in Bezug auf den Reifen mittels wenigstens eines Anzeigefelds der Steuer- und Anzeigeeinrichtung angezeigt.

Die Erfindung beruht auf der Erkenntnis, die räumliche Lage des Messkopfs, das heißt die Beobachtungsposition und/oder die Beobachtungsrichtung, in Bezug auf den Reifen mittels der Steuer- und Anzeigeeinrichtung anzuzeigen. Auf diese Weise wird zum einen ein manuell gesteuertes Manövrieren des Messkopfs, beispielsweise bei der Erstellung eines Prüfprogramms, wesentlich erleichtert. Zum anderen wird die Auswertung des Messergebnisses vereinfacht, da sich aus der Anzeige der Beobachtungsposition und/oder der Beobachtungsrichtung des Messkopfs in Bezug auf den Reifen die räumliche Lage des das Messergebnis betreffenden Bereichs des Reifens bequem ableiten lässt.

Bevorzugt ist der Messkopf mit einer Kamera versehen und hat ein Gesichtsfeld. Die zweckmäßigerweise über einen lichtempfindlichen Halbleitersensor verfügende Kamera ermöglicht, digitale Ergebnisbilder zu erzeugen, die einfach zu archivieren sind und den verschiedensten Auswerteverfahren, zum Beispiel einem Phasenshiftverfahren, unterzogen werden können. Von Vorteil ist es, wenn in dem Anzeigefeld das Gesichtsfeld und/oder ein das Gesichtsfeld kennzeichnender Gesichtswinkel in Bezug auf den Reifen angezeigt werden.

In einer bevorzugten Ausführungsform der Erfindung weist die Steuer- und Anzeigeeinrichtung ein erstes Anzeigefeld auf, durch das die Beobachtungsposition und/oder die Beobachtungsrichtung des Messkopfs in Bezug auf einen Querschnitt durch den Reifen angezeigt werden. Ein solches Anzeigefeld kommt beispielsweise dann zum Tragen, wenn der Messkopf die innere Umfangsfläche des Reifens abtastet, und eignet sich besonders, den Gesichtswinkel des Messkopfs anzuzeigen.

In einer weiteren bevorzugten Ausgestaltung der Erfindung weist die Steuer- und Anzeigeeinrichtung ein zweites Anzeigefeld auf, mittels dem die Beobachtungsposition und/oder die Beobachtungsrichtung des Messkopfs in Bezug auf eine Draufsicht auf den Reifen angezeigt werden. Wird zum Beispiel beim Prüfen der inneren Umfangsfläche des Reifens sowohl der Bereich des Gürtels des Reifens, als auch die sich im Übergang von der Lauffläche auf die Seitenwand befindende Schulter des Reifens, so genannter Crown Shot, abgetastet oder wird die Seitenwand des Reifens geprüft, dann ermöglicht das zweite Anzeigefeld zudem die Anzeige des Gesichtsfelds des Messkopfs und damit des zu prüfenden Bereichs des Reifens.

In einer weiteren bevorzugten Ausgestaltung der Erfindung weist die Steuer- und Anzeigeeinrichtung ein drittes Anzeigefeld auf, mittels dem das Gesichtsfeld des Messkopfs in Bezug auf ein Segment des Reifens angezeigt wird. Bei dem Segment des Reifens handelt es sich vorteilhafterweise um den der Lauffläche abgewandten Bereich der inneren Umfangsfläche des Reifens, der im Allgemeinen durch einen Gürtel armiert ist, so dass sich das dritte Anzeigefeld in besonderem Maße eignet, um das Gesichtsfeld bei einem Crown Shot anzuzeigen. Wird der Reifen jedoch von außen abgetastet, umfasst das Segment vorteilhafterweise die äußere Umfangsfläche des Reifens.

Bevorzugt weist die Steuer- und Anzeigeeinrichtung ein Eingabefeld zum Eingeben einer Anzahl an Sektoren, die den Reifen in einzelne Messabschnitte gliedern, auf. Die Anzahl der Sektoren ist vorzugsweise in einem separaten Anzeigefeld anzeigbar. Von besonderem Vorteil ist es, die Sektoren in dem zweiten Anzeigefeld und/oder in dem dritten Anzeigefeld anzuzeigen, um die Größe der Sektoren im Verhältnis zu der Größe des Gesichtsfelds oder des Gesichtswinkels kenntlich zu machen. Die absolute Größe der Sektoren und damit des Gesichtsfelds oder des Gesichtswinkels des Messkopfs lässt sich einfach feststellen, wenn vorteilhafterweise der Winkel, den die Sektoren einschließen, oder die dem Winkel entsprechende Bogenlänge in dem zweiten Anzeigefeld und/oder in dem dritten Anzeigefeld angezeigt wird. In letzterem Fall wird die Bogenlänge zweckmäßigerweise in Bezug auf den Außendurchmesser des Reifens angegeben, um eine praxisgerechte Handhabung sicherzustellen.

In einer bevorzugten Ausgestaltung der erfindungsgemäßen Vorrichtung ist der Messkopf durch das Positionierungsmittel in einer axialen Richtung und/oder in einer radialen Richtung bewegbar. Darüber hinaus können der Messkopf und der Reifen durch das Positionierungsmittel relativ zueinander um eine sich in axialer Richtung erstreckenden Rollachse drehbar sein. Das Positionierungsmittel kann ferner dazu dienen, den Messkopf um eine orthogonal zu der Rollachse verlaufenden Schwenkachse zu drehen.

Bevorzugt umfasst das Positionierungsmittel eine erste Verstelleinheit, durch die der Messkopf in der axialen Richtung bewegbar ist, und/oder eine zweite Verstelleinheit, durch die der Messkopf in einer radialen Richtung bewegbar ist, und/oder eine dritte Verstelleinheit, durch die der Messkopf und der Reifen relativ zueinander um die Rollachse drehbar sind, und/oder eine vierte Verstelleinheit, durch die der Messkopf um eine orthogonal zu der Rollachse verlaufenden Schwenkachse drehbar ist. Die erste Verstelleinheit und die zweite Verstelleinheit ermöglichen eine Translationsbewegung des Messkopfs in beispielsweise horizontaler und vertikaler Richtung. Die dritte Verstelleinheit und vierte Verstelleinheit ermöglichen eine Rotationsbewegung des Messkopfs in Bezug auf den Reifen. Wird die erfindungsgemäße Vorrichtung mit sämtlichen der vier Verstelleinheiten versehen, dann verfügt das Positionierungsmittel über zwei Translationsfreiheitsgrade und zwei Rotationsfreiheitsgrade, die ein exaktes Positionieren und Ausrichten des Messkopfs sicherstellen. Je nach Anwendungsfall kann das Positionsmittel weniger, aber auch mehr als vier Verstelleinheiten aufweisen. Zudem ist es möglich, die erste Verstelleinheit und/oder die zweite Verstelleinheit durch eine Verstelleinheit zu ersetzen, die dem Positionierungsmittel keinen Translationsfreiheitsgrad, sondern einen weiteren Rotationsfreiheitsgrad verleiht. Zweckmäßigerweise weist die Steuer- und Anzeigeeinrichtung wenigstens ein Bedienfeld auf, mittels dem die erste Verstelleinheit und/oder die zweite Verstelleinheit und/oder die dritte Verstelleinheit und/oder die vierte Verstelleinheit gesteuert werden.

Bevorzugt weist die Steuer- und Anzeigeeinrichtung wenigstens ein Anzeigefeld auf, mittels dem die räumliche Verschiebung des Messkopfs in axialer Richtung, so genannter axialer Offset, und/oder die räumliche Verschiebung des Messkopfs in radialer Richtung, so genannter radialer Offset, und/oder der Drehwinkel der Rotation des Messkopfs relativ zu dem Reifen und/oder der Neigungswinkel einer durch ein Schwenken um die Schwenkachse hervorgerufenen Neigung des Messkopfs angezeigt werden. Das Anzeigefeld kann im Bedarfsfall zugleich ein Bedienfeld sein, das es ermöglicht, die räumliche Lage des Messkopfs einzugeben.

In diesem Zusammenhang hat es sich als besonders vorteilhaft erwiesen, die räumliche Verschiebung des Messkopfs in axialer Richtung und/oder die räumliche Verschiebung des Messkopfs in radialer Richtung mittels Koordinaten eines Koordinatensystems anzuzeigen und/oder einzugeben, dessen Ursprung im Schnittpunkt von Rollachse und einer Reifenmittenebene liegt. Unter Reifenmittenebene im voranstehenden Sinn wird die Ebene verstanden, die sich in axialer Richtung durch die Mitte des Reifens erstreckt. Hat der zu prüfende Reifen, wie in den meisten Fällen, einen symmetrischen Aufbau, dann entspricht die Reifenmittenebene der Symmetrieebene. Verfügt der Reifen hingegen über einen asymmetrischen Aufbau, wie es gelegentlich bei Flugzeugreifen anzutreffen ist, oder wird der Reifen, wie es in der DE 199 44 314 A1 beschrieben ist, in einer liegenden Position geprüft und verformt sich auf Grund des Gewichts des Reifens die Seitenwand, auf welcher der Reifen aufliegt, in einem nicht zu vernachlässigenden Maß, dann ist die Reifenmittenebene die Ebene, die in axialer Richtung durch die Mitte der Maulweite des Reifens geht. Ein Koordinatensystem, dessen Ursprung im Schnittpunkt von Rollachse, das heißt der Achse, um die sich der Reifen üblicherweise dreht, und der Reifenmittenebene liegt, bietet den Vorteil, dass die räumliche Verschiebung des Messkopfs in axialer Richtung und in radialer Richtung unabhängig von der Ausgestaltung des Positionierungsmittels und der Lage des Reifens während der Prüfung ist. Die Koordinaten charakterisieren die Beobachtungsposition des Messkopfs auf diese Weise in einem universellen Bezugsystem, das die Messergebnisse, die mittels unterschiedlicher Prüfvorrichtungen gewonnen worden sind, vergleichbar und die Prüfprogramme zur Erzeugung der Messergebnisse die mittels unterschiedlicher Prüfvorrichtungen erstellt werden können, austauschbar macht.

Vorteilhaft ist es, wenn der Drehwinkel der Rotation des Messkopfs in Bezug auf eine vorgegebene Kennzeichnung des Reifens angezeigt und/oder eingegeben wird. Bei der Kennzeichnung des Reifens kann es sich um die so genannte DOT-Nummer (Department of Transportation) handeln, ein auf Reifen in der Regel anzutreffender Identifikationscode, der das Herstellungsdatum angibt und weitere Daten über die maximale Tragfähigkeit, den maximal zulässigen Fülldruck sowie die verwendeten Cordlagen für Karkasse und Gürtel enthalten kann. Bei der Kennzeichnung des Reifens kann es sich jedoch auch um eine eigens für die Prüfung des Reifens an dem Reifen angebrachte oder um eine sonstige Markierung handeln.

Bevorzugt weist die Steuer- und Anzeigeeinrichtung ein Anzeigefeld auf, mittels dem das von der Kamera aufgenommene Bild angezeigt wird. Dieses Videobild bietet vornehmlich eine Orientierungshilfe, und zwar vor allem dann, wenn der Messkopf durch eine manuelle Steuerung manövriert wird.

In einer bevorzugten Ausgestaltung der Erfindung wird das Messergebnis durch wenigstens ein Ergebnisbild dargestellt. Die Steuer- und Anzeigeeinrichtung weist in diesem Fall wenigstens ein Anzeigefeld auf, mittels dem das Ergebnisbild angezeigt wird. Bei dem Ergebnisbild handelt es sich beispielsweise um ein Interferogramm, ein den Gradienten der Verformung an der Oberfläche des geprüften Reifens kennzeichnendes Shearogramm, ein Phasenbild oder ein Phasendifferenzbild, wie es aus der EP 1 014 036 B1 bekannt ist. In diesem Zusammenhang hat es sich als vorteilhaft erwiesen, wenn die Steuer- und Anzeigeeinrichtung ein Anzeigefeld aufweist, mittels dem wenigstens eine Serie an Ergebnisbildern, die während einer vollständigen Rotation des Messkopfs relativ zu dem Reifen in den jeweiligen Sektoren gewonnen werden, angezeigt wird. Demzufolge lässt sich mit Hilfe von einem solchen Anzeigefeld ein so genannter Scan anzeigen. Üblicherweise werden für eine vollständige Prüfung des Reifens drei Scans durchgeführt. Mittels des ersten Scans wird die innere Umfangsfläche des Reifens (Crown Shot) geprüft. Befindet sich der Reifen während der Prüfung in einer liegenden Position, dann wird mittels des zweiten Scans die zunächst oben liegende Seitenwand (Side-Wall Shot) geprüft. Die zunächst unten liegende und nach einem Wenden des Reifens oben liegende Seitenwand wird schließlich mittels eines dritten Scans (Side-Wall Shot) geprüft. Das Anzeigefeld kann einen einzelnen Scan oder zwei oder mehrere Scans anzeigen.

Weiterhin ist es von Vorteil, wenn die Steuer- und Anzeigeeinrichtung ein Anzeigefeld aufweist, mittels dem eine Serie an Ergebnisbildern, die in den jeweiligen Sektoren eines vorgegebenen Ausschnitts gewonnen werden, angezeigt wird. Mit Hilfe von einem solchen Anzeigefeld lassen sich sämtliche Ergebnisbilder eines einzelnen Scans oder auch mehrere Scans anzeigen, die in den Sektoren gewonnen werden, die in einem Ausschnitt von beispielsweise 30° bis 135° gemessen von einem vorgegebenen Nullpunkt, zum Beispiel der DOT-Nummer, liegen. Zweckmäßigerweise weist die Steuer- und Anzeigeeinrichtung ferner ein Anzeigefeld auf, mittels dem der ausgewählte Ausschnitt in Bezug auf eine Draufsicht auf den Reifen angezeigt wird. Je nach Anwendungsfall kann ein solches Anzeigefeld zugleich ein Bedienfeld sein, um den gewünschten Ausschnitt auszuwählen.

In einer bevorzugten Ausgestaltung der Erfindung weist die Steuer- und Anzeigeeinrichtung wenigstens ein Anzeigefeld auf, das dem gewonnenen Ergebnisbild zugeordnet ist und mittels dem die Beobachtungsposition und/oder die Beobachtungsrichtung, die der Messkopf beim Erzeugen des Ergebnisbilds hat, angezeigt werden. Ein solches Anzeigefeld kann zugleich als Bedienfeld ausgestaltet sein, um einen gewünschten Scan auszuwählen.

Bevorzugt wird die Position einer ermittelten Fehlstelle des Reifens in wenigstens einem der Anzeigefelder angezeigt, um das Auffinden der Fehlstelle bei einer Verifizierung des Messergebnisses zu erleichtern. Die Position der Fehlstelle wird zweckmäßigerweise als Bogenlänge am Außendurchmesser des Reifens angezeigt, um ein einfaches Auffinden der Fehlstelle oder eines sonstigen auffälligen Merkmals durch Nachmessen am Reifen zu ermöglichen.

Um das Messergebnis zu dokumentieren, ist es von Vorteil, wenn die Steuer- und Anzeigeeinrichtung ein Bedienfeld aufweist, mittels dem ein das Messergebnis protokollierender Prüfbericht erzeugtwird.

Die Steuer- und Anzeigeeinrichtung umfasst zweckmäßigerweise einen Rechner, ein Eingabegerät für die Eingabe- und Bedienfelder der Steuer- und Anzeigeeinrichtung sowie einen Monitor für die Anzeigefelder der Steuer- und Anzeigeeinrichtung. Das Eingabegerät kann beispielsweise eine Tastatur, eine Maus oder ein Touchscreen sein. Die Steuer- und Anzeigeeinrichtung kann von dem Messkopf und dem Positionierungsmittel räumlich getrennt und beispielsweise via Internet mit diesen verbunden sein.

Um ein interferometrisches Messverfahren durchzuführen, umfasst der Messkopf vorteilhafterweise eine Beleuchtungseinheit, durch welche der Reifen beleuchtet wird, und ein Shearingelement, durch das die von dem Reifen rückgestreuten Lichtbündel zur Interferenz gebracht werden. Darüber hinaus ist die Kamera mit einem Objektiv versehen, das zur Aufnahme der interferierenden Lichtbündel im Strahlengang des Shearingelements angeordnet ist. Einzelheiten und weitere Vorteile der Erfindung ergeben sich aus der nachfolgenden Beschreibung bevorzugter Ausführungsbeispiele. In den die Ausführungsbeispiele lediglich schematisch darstellenden Zeichnungen veranschaulichen im Einzelnen:
- Fig. 1: eine schematische Darstellung des Messkopfs und der Steuerund Anzeigeeinrichtung einer Vorrichtung zum Prüfen eines Reifens;
- Fig. 2a: eine schematische Darstellung eines Positionierungsmittels der Vorrichtung gemäß Fig. 1 und eines Querschnitts durch einen mit der Vorrichtung gemäß Fig. 1 zu prüfenden Reifen;
- Fig. 2b: eine Draufsicht auf die Vorrichtung und den Reifen gemäß Fig. 2a;
- Fig. 3: eine Darstellung der Steuer- und Anzeigeeinrichtung gemäß Fig. 1, die den Messkopf in einer ersten Beobachtungsposition zeigt;
- Fig. 4: eine Darstellung gemäß Fig. 3, die den Messkopf in einer zweiten Beobachtungsposition zeigt;
- Fig. 5: eine Darstellung gemäß Fig. 4, die einen in sechs Sektoren gegliederten Messbereich zeigt;
- Fig. 6: eine Darstellung gemäß Fig. 5, die einen in zehn Sektoren gegliederten Messbereich zeigt;
- Fig. 7: eine Darstellung gemäß Fig. 3, die den Messkopf in einer dritten Beobachtungsposition zeigt;
- Fig. 8: eine Darstellung gemäß Fig. 3, die den Messkopf in einer vierten Beobachtungsposition zeigt;
- Fig. 9: eine Darstellung der Steuer- und Anzeigeeinrichtung, welche die Ergebnisbilder von drei durchgeführten Scans zeigt;
- Fig. 10: eine Darstellung der Steuer- und Anzeigeeinrichtung, welche die Ergebnisbilder in einem ausgewählten Ausschnitt zeigt;
- Fig. 11: eine Darstellung gemäß Fig. 9, welche die Ergebnisbilder des ersten Scans zeigt;
- Fig. 12: die Darstellung eines Prüfberichts über die Ergebnisbilder gemäß Fig. 11;
- Fig. 13: eine Darstellung gemäß Fig. 11, welche die Ergebnisbilder des zweiten Scans zeigt;
- Fig. 14: eine Darstellung gemäß Fig. 11, die das Gesichtsfeld des Messkopfs in Bezug auf den Reifen zeigt;
- Fig. 15: eine Darstellung gemäß Fig. 13, die das Gesichtsfeld des Messkopfs in Bezug auf den Reifen zeigt;
- Fig. 16: die Darstellung eines Prüfberichts über die Ergebnisbilder gemäß Fig. 15;
- Fig. 17: eine Darstellung der Steuer- und Anzeigeeinrichtung, die das während des zweiten Scans im dritten Sektor gewonnene Ergebnisbild sowie die Lage einer Fehlstelle zeigt, und
- Fig. 18: die Darstellung eines Prüfberichts über das Ergebnisbild gemäß Fig. 17.

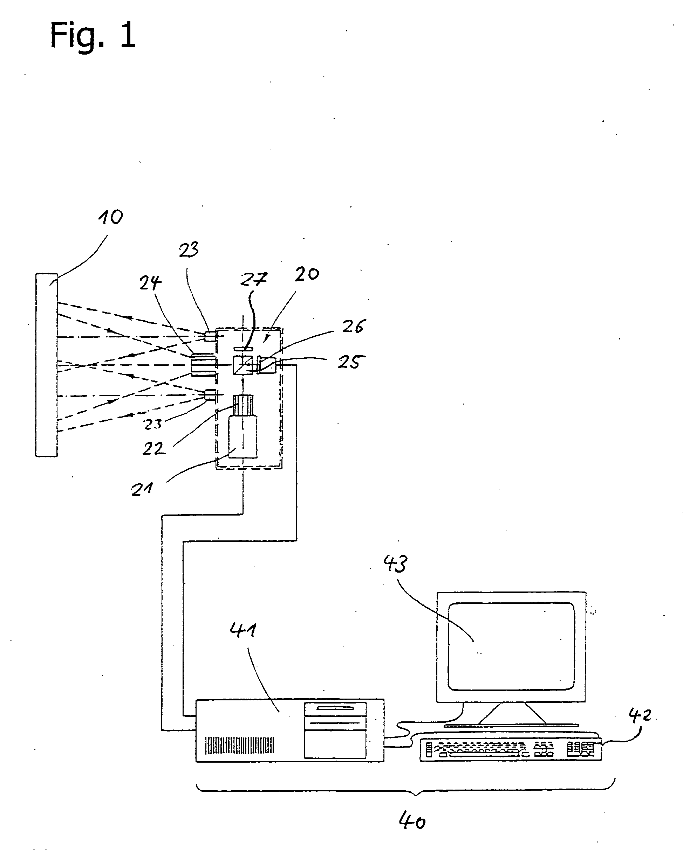

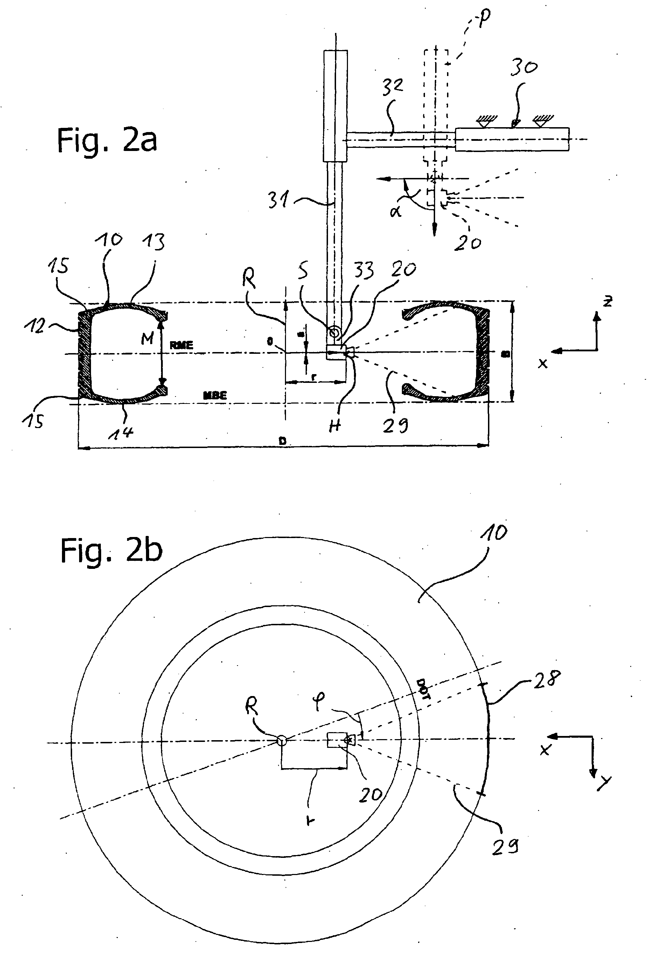

Die in Fig. 1 dargestellte Vorrichtung dient zum Prüfen eines Reifens 10 mittels eines interferometrischen Messverfahrens. Wie ferner die Fig. 2a, 2b zu erkennen geben, weist die Vorrichtung zu diesem Zweck einen Messkopf 20, ein Positionierungsmittel 30, durch das der Messkopf 20 in einer Beobachtungsposition positionierbar und in einer Beobachtungsrichtung ausrichtbar ist, und eine Steuer- und Anzeigeeinrichtung 40 auf. Um den Reifen 10 in zwei unterschiedlichen Verformungszuständen zu prüfen, kann der Reifen 10 in einer nicht dargestellten Druckkammer angeordnet sein, wie sie beispielsweise in der DE 199 44 314 A1 beschrieben ist. Die unterschiedlichen Verformungszustände des Reifens 10 müssen jedoch nicht zwangsläufig durch eine Druckänderung in der Druckkammer hervorgerufen werden, sondern können auf jede geeignete Weise erzeugt werden.

Wie Fig. 1 zu erkennen gibt, weist der Messkopf 20 eine mit einem Objektiv 22 und einem nicht dargestellten Halbleitersensor, zum Beispiel einen CCD-oder CMOS-Sensor, versehene Kamera 21, eine Vielzahl an als Beleuchtungseinheit fungierenden Laserdioden 23, ein Objektiv 24 und ein sich aus einem Strahlteiler 25, einem bewegbaren Spiegel 26 und einem stationären Spiegel 27 zusammensetzendes Shearingelement auf. Mittels der kohärentes Licht emittierenden Laserdioden 23 wird der Reifen 10 beleuchtet. Die von der Oberfläche des Reifens 10 rückgestreuten Lichtbündel werden mittels des Objektivs 24 aufgenommen und auf das Shearingelement 25, 26, 27 abgebildet sowie mit Hilfe von diesem zur Interferenz gebracht. Die interferierenden Lichtbündel werden mittels des im Strahlengang des Shearingelements 25, 26, 27 angeordneten Objektivs 22 als Interferogramm aufgenommen und dem Halbleitersensor zugeführt, der das Interferogramm elektronisch verarbeitet.

Die durch die elektronische Verarbeitung generierten Daten werden an die Steuer- und Anzeigeeinrichtung 40 übertragen. Die Steuer- und Anzeigeeinrichtung 40 umfasst einen Rechner 41, mittels dem die Daten gespeichert und verarbeitet werden, ein Eingabegerät 42 in Form einer Tastatur und einer nicht dargestellten Maus sowie einen Monitor 43, der je nach Anwendungsfall als Touchscreen ausgestaltet und damit ein alternatives oder zusätzliches Eingabegerät sein kann.

Die Steuer- und Anzeigeeinrichtung 40 dient zum einen dazu, dass von dem Messkopf 20 durch Abtasten des Reifens 10 erzeugte Messergebnis in Form von Ergebnisbildern anzuzeigen. Zum anderen hat die Steuer- und Anzeigeeinrichtung 40 die Funktion, das Positionierungsmittel 30 zu steuern, um den Messkopf 20 in der Beobachtungsposition zu positionieren und in der Beobachtungsrichtung auszurichten. Wie insbesondere die Fig. 2a und 2b zu erkennen geben, weist das Positionierungsmittel 30 eine erste Verstelleinheit 31 auf, durch die der Messkopf 20 in einer axialen Richtung z des Reifens 10 bewegbar ist. Wird der Reifen 10 in einer liegenden Position geprüft, dann verläuft die axiale Richtung z vertikal. Das Positionierungsmittel 30 weist ferner eine zweite Verstelleinheit 32 auf, durch die der Messkopf 20 in einer radialen Richtung x des Reifens 10 bewegbar ist. Die radiale Richtung x verläuft horizontal, wenn der Reifen 10 in einer liegenden Position geprüft wird. Darüber hinaus weist das Positionierungsmittel 30 eine dritte Verstelleinheit auf, die nicht dargestellt ist und durch die der Messkopf 20 und der Reifen 10 relativ zueinander um eine sich in axialer Richtung z erstreckenden Rollachse R drehbar sind. Die dritte Verstelleinheit lässt sich beispielsweise durch einen Drehteller realisieren, auf dem der Reifen 10 in liegender Position angeordnet ist. Das Positionierungsmittel 30 umfasst schließlich eine vierte Verstelleinheit 33, durch die der Messkopf 20 um eine orthogonal zu der Rollachse R verlaufenden Schwenkachse S drehbar ist.

Die durch die erste Verstelleinheit 31 erzeugte räumliche Verschiebung a des Messkopfs 20 in axialer Richtung z und die durch die zweite Verstelleinheit 32 erzeugte räumliche Verschiebung r des Messkopfs 20 in radialer Richtung x erfolgt in Bezug auf den Hauptpunkt H des Objektivs 24 des Messkopfs 20 und in einem Koordinatensystem, dessen Ursprung 0 im Schnittpunkt von Rollachse R und einer Reifenmittenebene RME liegt. Wie die Fig. 2a und 2b zu erkennen geben, geht die Rollachse R durch den Mittelpunkt des Reifens 10. Der Abstand der Rollachse R von der Lauffläche 12 des Reifens 10 beträgt folglich die Hälfte des Durchmessers D des Reifens 10. Die Reifenmittenebene RME erstreckt sich in axialer Richtung z in der Mitte der Maulweite M des Reifens 10. Verfügt der Reifen 10 über einen symmetrischen Aufbau, dann erstreckt sich die Reifenmittenebene RME zugleich durch die Mitte der Breite B des Reifens 10, wie in Fig. 2a gezeigt ist. Wird der Reifen 10 in einer liegenden Position geprüft und liegt demzufolge eine der Seitenwände 13, 14 des Reifens 10 auf der Maschinenbasisebene MBE auf, dann kann es insbesondere bei relativ schweren Reifen 10 vorkommen, dass sich die Seitenwand 14 unter dem Gewicht des Reifens 10 in einem nicht zu vernachlässigenden Maß verformt. In diesem Fall fallen die Mitte der Maulweite M und die Mitte der im unbelasteten Zustand des Reifens 10 gemessenen Breite B auseinander. Um vergleichbare Messergebnisse zu erzielen, erstreckt sich die den Ursprung 0 definierende Reifenmittenebene RME dann in der Mitte der Maulweite M oder durch den Scheitel des Reifens 10. Alternativ kann in einem solchen Fall der Ursprung 0 des Koordinatensystems in den Schnittpunkt zwischen der Rollachse R und der Maschinenbasisebene MBE verlagert werden. Letzteres bietet sich auch dann an, wenn die Größe der Breite B und der Maulweite M des Reifens 10 sowie die Lage des Scheitels des Reifens 10 unbekannt sind.

Wie insbesondere Fig. 2b zu erkennen gibt, erstreckt sich der Drehwinkel ϕ der von der dritten Verstelleinheit hervorgerufenen Rotation des Messkopfs 20 relativ zu dem Reifen 10 in der Reifenmittenebene RME. Der Scheitel des Drehwinkels ϕ liegt im Ursprung 0 des Koordinatensystems. Ein Schenkel des Drehwinkels ϕ verläuft durch eine ausgewählte Kennzeichnung des Reifens 10, bei der es sich im vorliegenden Fall um die unter anderem das Herstellungsdatum des Reifens 10 angebende DOT-Nummer handelt, die sogenannte 0°-Position. Der Neigungswinkel α, der sich infolge der von der vierten Verstelleinheit 33 hervorgerufenen Rotation des Messkopfs 20 um die Schwenkachse S ergibt, wird in Bezug auf eine Ebene abgegeben, in der die Rollachse R liegt und die in Umfangsrichtung des Reifens 10 von der 0°-Position aus um den Drehwinkel ϕ gedreht ist. Die Schwenkachse S ist folglich parallel zu der Tangente an den Reifen 10 in der jeweiligen Beobachtungsposition.

Die Fig. 2a und 2b geben ferner zu erkennen, dass der von dem Messkopf 20 erfasste Bildausschnitt durch das Gesichtsfeld 28 und den Gesichtswinkel 29 begrenzt wird. Der Gesichtswinkel 29 ist der doppelte Wert des Winkels, den ein zum Rand des Gesichtsfelds 28 gehörender Strahl mit der optischen Achse des Objektivs 24 bildet.

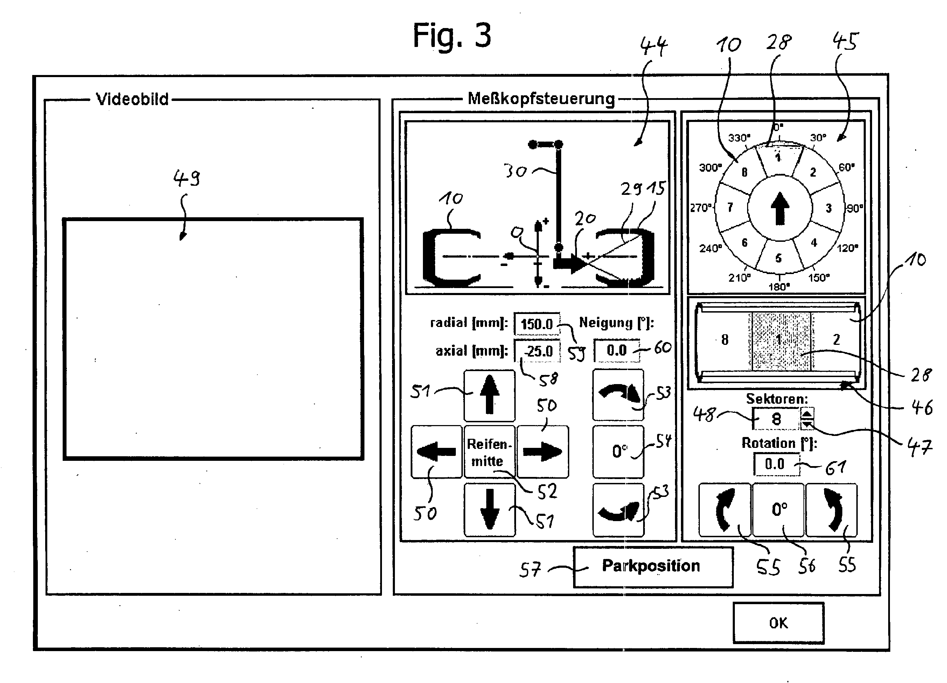

Die Fig. 3 bis 8 zeigen eine erste Benutzungsschnittstelle der Steuer- und Anzeigeeinrichtung 40, die im vorliegenden Fall eine auf dem Monitor 43 dargestellte graphische Bedienoberfläche ist. Die Benutzungsschnittstelle weist ein Anzeigefeld 44 auf, mittels dem die Bobachtungsposition und die Beobachtungsrichtung des Messkopfs 20 in Bezug auf einen Querschnitt durch den Reifen 10 angezeigt wird. Die Beobachtungsrichtung wird durch einen Pfeil dargestellt, dessen Spitze den Hauptpunkt H des Objektivs 24 und damit die Beobachtungsposition des Messkopfs 20 symbolisiert.

Der Reifen 10 wird maßstabsgetreu hinsichtlich des Durchmessers D, der Breite W und des Querschnittsverhältnisses von Höhe zu Breite des Reifenquerschnitts angezeigt. Der von dem Messkopf 20 erfasste Bildausschnitt wird durch den Gesichtswinkel 29 sichtbar gemacht, wobei aufgrund der maßstabsgetreuen Abbildung des Reifens 10 auch der durch den Gesichtswinkel 29 begrenzte Bildausschnitt maßstabsgetreu ist. Zu erkennen ist in dem Anzeigefeld 44 ferner das Koordinatensystem und, in stilisierter Form, das Positionierungsmittel 30.

Die Benutzungsschnittstelle weist ferner ein Anzeigefeld 45 auf, mittels dem die Beobachtungsposition und die Beobachtungsrichtung des Messkopfs 20 in Bezug auf eine Draufsicht auf den Reifen 10 angezeigt wird. Die Beobachtungsrichtung wird erneut durch einen Pfeil dargestellt, dessen Spitze die Lage des Hauptpunkts H des Objektivs 24 und damit die Beobachtungsposition des Messkopfs 20 angibt. Der Reifen 10 wird maßstabsgetreu hinsichtlich des Durchmessers D und des Querschnittsverhältnisses angezeigt. Zu erkennen sind in dem Anzeigefeld 45 ferner die Sektoren, durch die der Reifen 10 in einzelne, sich in Umfangsrichtung erstreckende Messabschnitte gegliedert wird. Die Größe der Sektoren wird durch die Angabe des Winkels, den die Sektoren jeweils einschließen, sichtbar gemacht. Die Angabe des Winkels erfolgt im Uhrzeigersinn, wodurch zugleich die Reihenfolge der Sektoren entlang des Umfangs des Reifens 10 veranschaulicht wird. In dem Anzeigefeld 45 wird außerdem das Gesichtsfeld 28 angezeigt, wenn der Messkopf 20 zumindest auf einen Teil der Seitenwand 13, 14, insbesondere auf die Schulter 15 des Reifens 10, gerichtet ist. Das Gesichtsfeld 28 wird zweckmäßigerweise mittels einer augenfälligen Kontrastfarbe dargestellt.

Weiterhin weist die Benutzungsschnittstelle ein Anzeigefeld 46 auf, mittels dem ein Segment des Reifens 10 in einer abgewickelten Draufsicht angezeigt wird. Das Segment umfasst den Teil der inneren Umfangsfläche des Reifens 10, welcher der Lauffläche 12 abgewandt ist. In dem Anzeigefeld 46 werden die Sektoren und das Gesichtsfeld 28 angezeigt. Die Anzahl der Sektoren lässt sich mittels eines Eingabefelds 47 eingeben und wird in einem Anzeigefeld 48 angezeigt. Je nach Anwendungsfall kann auch das Anzeigefeld 48 zum direkten Eingeben der Anzahl der Sektoren ausgestaltet sein.

Die Benutzungsschnittstelle ist ferner mit einer Vielzahl an Bedienfeldern 50 bis 57 versehen, die zum Steuern des Messkopfs 20 dienen. Mittels der Bedienfelder 51, 50 lässt sich die axiale Verschiebung a und die radiale Verschiebung r einstellen. Mittels des Bedienfelds 52 kehrt der Messkopf 20 in den Ursprung 0 des Koordinatensystems zurück. Mittels der Bedienfelder 53, 54 lässt sich der Neigungswinkel α einstellen. Der Drehwinkel ϕ lässt sich mit den Bedienfeldern 55, 56 einstellen. Das Bedienfeld 57 dient dazu, den Messkopf 20 in eine Parkposition P zu bewegen, die außerhalb des Reifens 10 liegt und beispielsweise zu Wartungszwecken oder für einen Wechsel des Reifens 10 angefahren wird. Die axiale Verschiebung a, die radiale Verschiebung r, der Neigungswinkel α und der Drehwinkel ϕ werden mit Hilfe von Anzeigefeldern 58, 59, 60, 61 angezeigt, die je nach Anwendungsfall auch eine direkte Eingabe der entsprechenden Werte ermöglichen.

Neben diesen primär zur Steuerung des Messkopfs 20 dienenden Anzeige-, Eingabe- und Bedienfeldern 44 bis 48, 50 bis 61 weist die Benutzungsschnittstelle außerdem ein Anzeigefeld 49 auf, mittels dem das von der Kamera 21 aufgenommene Videobild angezeigt wird. Das Anzeigefeld 49 ermöglicht eine visuelle Rückkopplung, die zur Orientierung bei der Steuerung des Messkopfs 20 beiträgt.

In Fig. 3 befindet sich der Messkopf 20 in einer Beobachtungsposition, bei der die axiale Verschiebung a -25,0 mm, die radiale Verschiebung r 150 mm sowie der Neigungswinkel α und der Drehwinkel ϕ jeweils 0° betragen. Die Beobachtungsrichtung des Messkopfs 20 ist auf einen Crown Shot ausgerichtet. Die Anzeigefelder 44, 45 geben zu erkennen, dass die obere Schulter 15 des Reifens 10 nicht vollständig in dem von dem Messkopf 20 erfassten Bildausschnitt liegt. Die Anzeigefelder 45, 48 geben zu erkennen, dass die Anzahl der Sektoren acht beträgt. Die Anzeigefelder 45, 46 geben zu erkennen, dass der Messkopf 20 auf den ersten Sektor ausgerichtet ist. Das Anzeigefeld 46 gibt zudem zu erkennen, dass sich der erste Sektor vollständig im Gesichtsfeld 28 befindet.

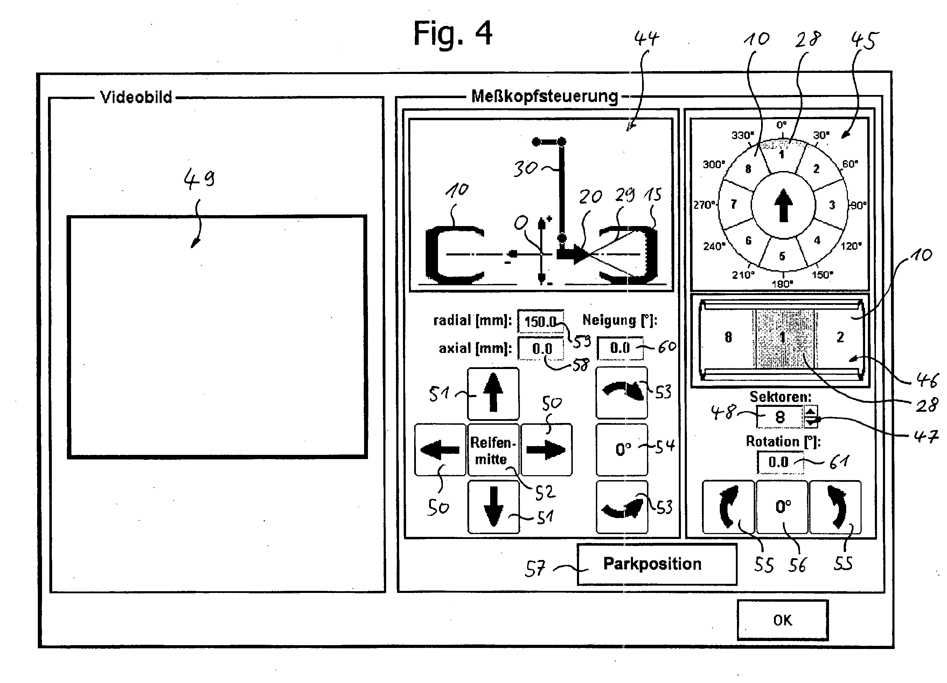

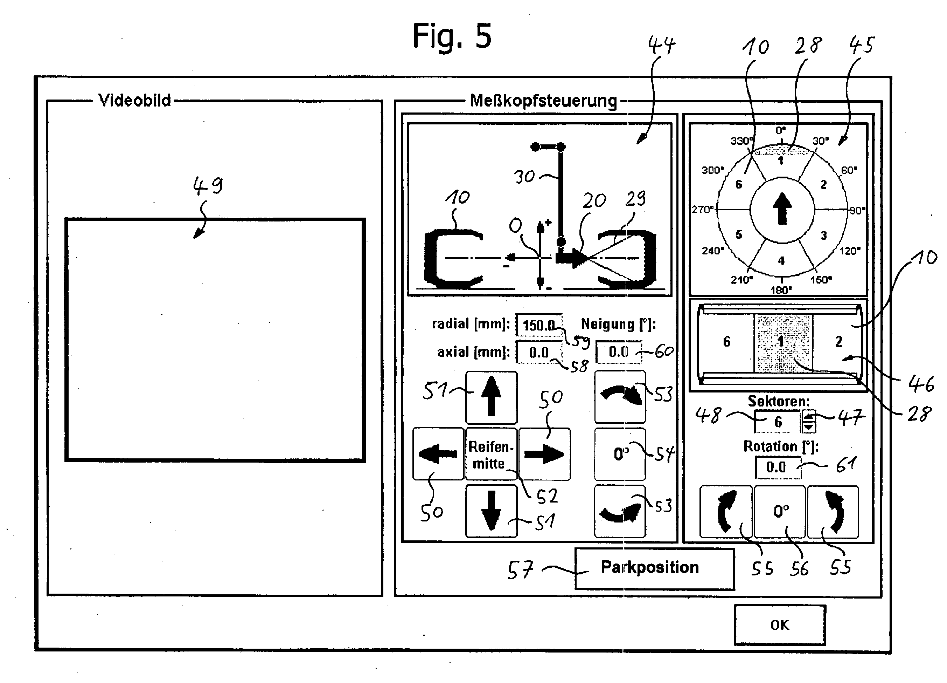

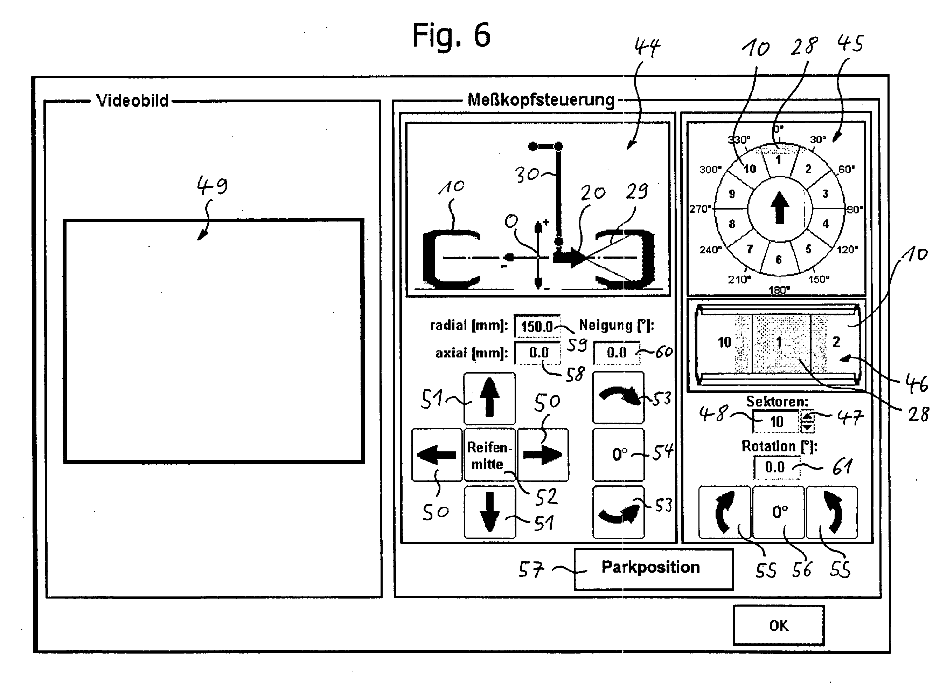

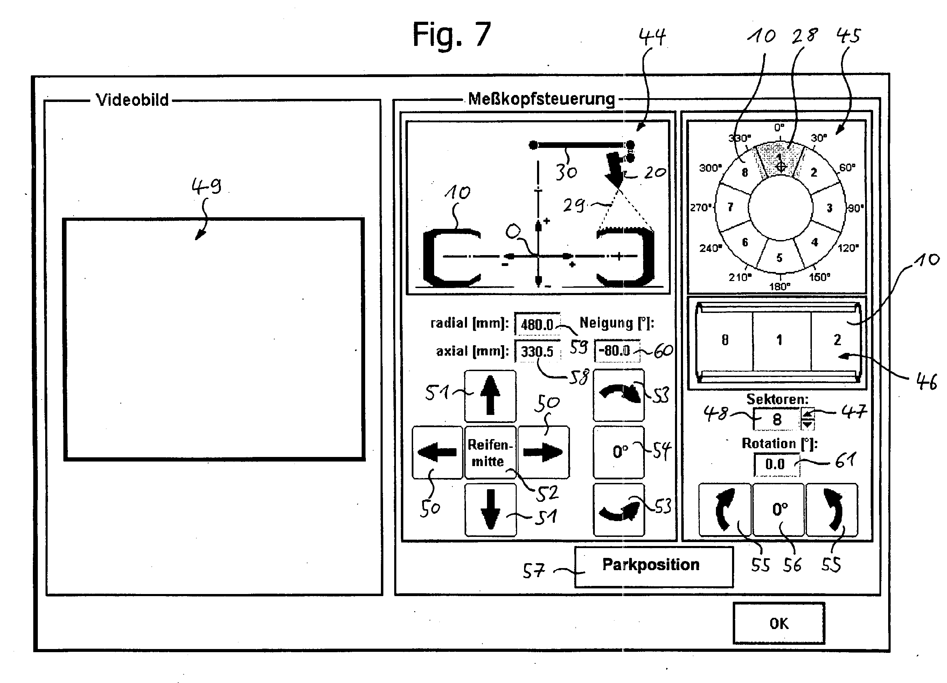

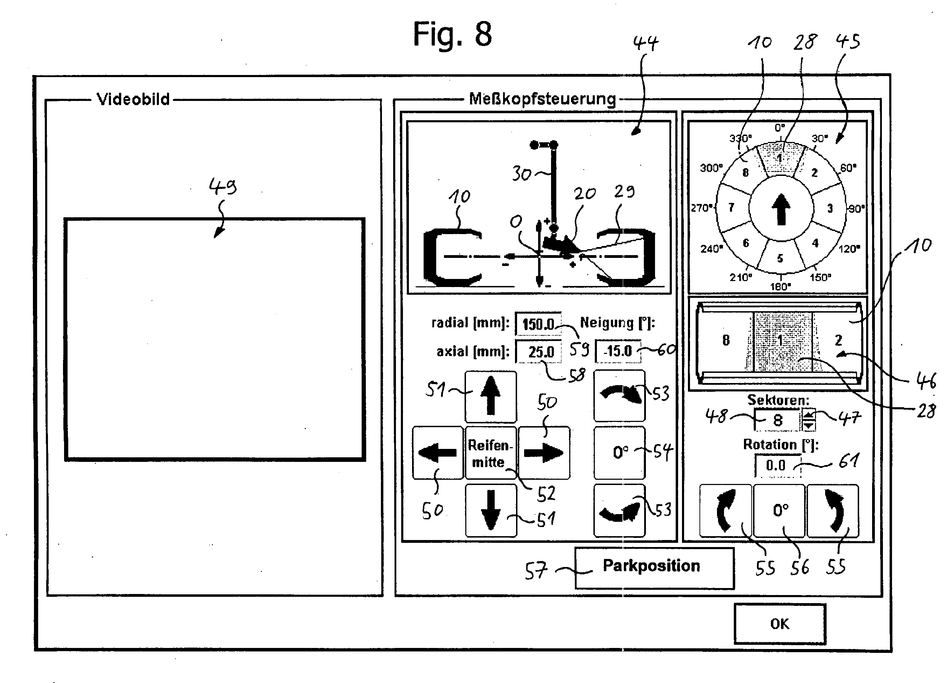

Die in Fig. 4 angezeigte Beobachtungsposition des Messkopfs 20 unterscheidet sich von der Beobachtungsposition gemäß Fig. 3 darin, dass die axiale Verschiebung a 0 mm beträgt. Die obere Schulter 15 des Reifens 10 befindet sich nun vollständig in dem von dem Messkopf 20 erfassten Bildausschnitt. Die Darstellung in den Fig. 5 und 6 unterscheidet sich von der Darstellung gemäß Fig. 4 in der Anzahl der Sektoren. Das Anzeigefeld 46 in Fig. 5 gibt anschaulich zu erkennen, dass bei einer Anzahl von 6 Sektoren das Gesichtsfeld 28 kleiner ist als ein Sektor, so dass der Sektor nicht vollständig von dem Messkopf 20 erfasst wird. Im Unterschied hierzu gibt das Anzeigefeld 46 in Fig. 6 zu erkennen, dass bei einer Anzahl von zehn Sektoren das Gesichtsfeld 28 deutlich größer ist als ein Sektor mit der Folge, dass sich ein Überlappungsbereich ergibt, der zwar ein redundantes Abtasten ermöglicht, aber die für die vollständige Prüfung des Reifens 10 erforderliche Zeit erhöht. Das Anzeigefeld 46 trägt somit dazu bei, die Anzahl der Sektoren an das vornehmlich von der Beobachtungsposition und der Beobachtungsrichtung des Messkopfs 20 abhängende Gesichtsfeld 28 in einem iterativen Prozess anzupassen. Das Gleiche gilt, wenn der Messkopf, wie in Fig. 7 gezeigt, auf einen Side Wall Shot oder, wie in Fig. 8 gezeigt, auf einen sogenannten Split-Crown Shot, einer Positionierung des Messkopfes 20, bei welcher das Gesichtsfeld 28 nur eine der beiden Schultern des Reifens 10 erfasst, ausgerichtet ist. Bei dem in Fig. 7 dargestellten Side Wall Shot wird im Anzeigefeld 45 die Beobachtungsposition des Messkopfs 20 nicht durch einen Pfeil, sondern durch eine die radiale Lage des Messkopfs 20 symbolisierende Markierung angezeigt.

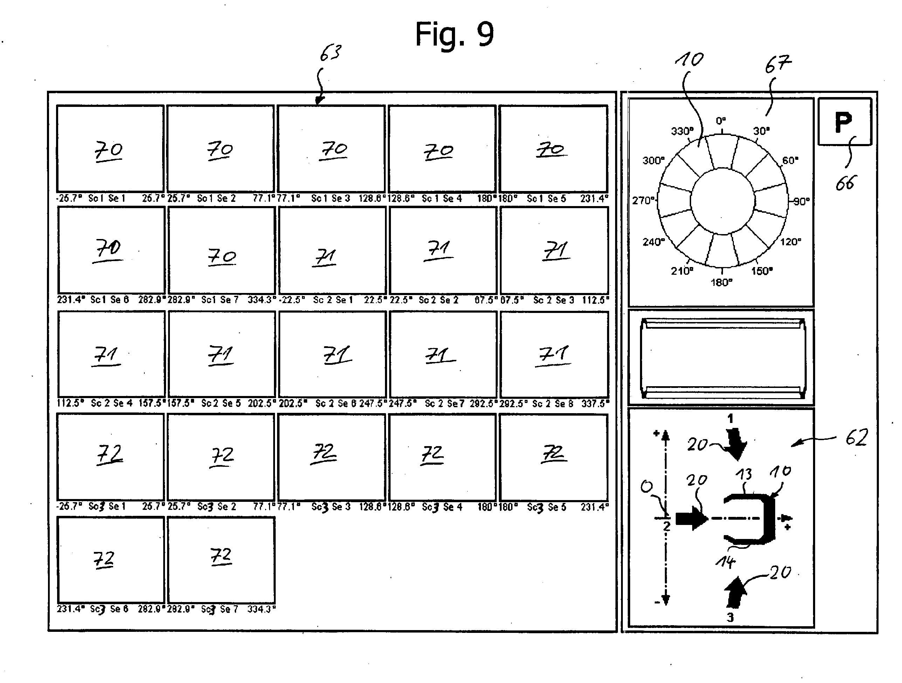

Eine zweite Benutzungsschnittstelle der Steuer- und Anzeigeeinrichtung 40 zeigt Fig. 9. Die Benutzungsschnittstelle weist in diesem Fall ein Anzeigefeld 63 auf, mittels dem eine Serie an Ergebnisbildern 70, 71, 72, die während einer vollständigen Rotation des Messkopfs 20 relativ zu dem Reifen 10 in den jeweiligen Sektoren gewonnen wurden, angezeigt wird. Die Benutzungsschnittstelle weist ferner ein Anzeigefeld 62 auf, mittels dem die Beobachtungsposition und die Beobachtungsrichtung, die der Messkopf 20 beim Aufnehmen der Ergebnisbilder 70, 71, 72 hatte, angezeigt wird. Das Anzeigefeld 62 gibt das Koordinatensystem, einen Querschnitt durch den Reifen 10 sowie Pfeile, welche die Beobachtungsposition und die Beobachtungsrichtung des Messkopfs 20 symbolisieren, an. Bei dem in Fig. 9 dargestellten Ausführungsbeispiel sind drei Pfeile vorhanden, von denen ein Pfeil einen während eines ersten Scans durchgeführten Side Wall Shot auf die obere Seitenwand 13 des Reifens 10, ein weiterer Pfeil einen während eines zweiten Scans durchgeführten Crown Shot und der letzte Pfeil einen während eines dritten Scans durchgeführten Side Wall Shot auf die untere Seitenwand 14 des Reifens 10 symbolisiert. Die während dieser Scans in den jeweiligen Sektoren gewonnen Ergebnisbilder 70, 71, 72 werden in dem Anzeigefeld 63 angezeigt. Das Anzeigefeld 63 gibt ferner zu erkennen, dass die Anzahl der Sektoren während des ersten und des dritten Scans sieben betrug und demzufolge jeweils sieben Ergebnisbilder 70, 72 erzeugt wurden. Die Anzahl der Sektoren während des zweiten Scans hingegen betrug acht, so dass sich acht Ergebnisbilder 71 ergeben. In dem Anzeigefeld 63 wird darüber hinaus die Zuordnung der Ergebnisbilder 70, 71, 72 zu dem entsprechenden Sektor des jeweiligen Scans angezeigt.

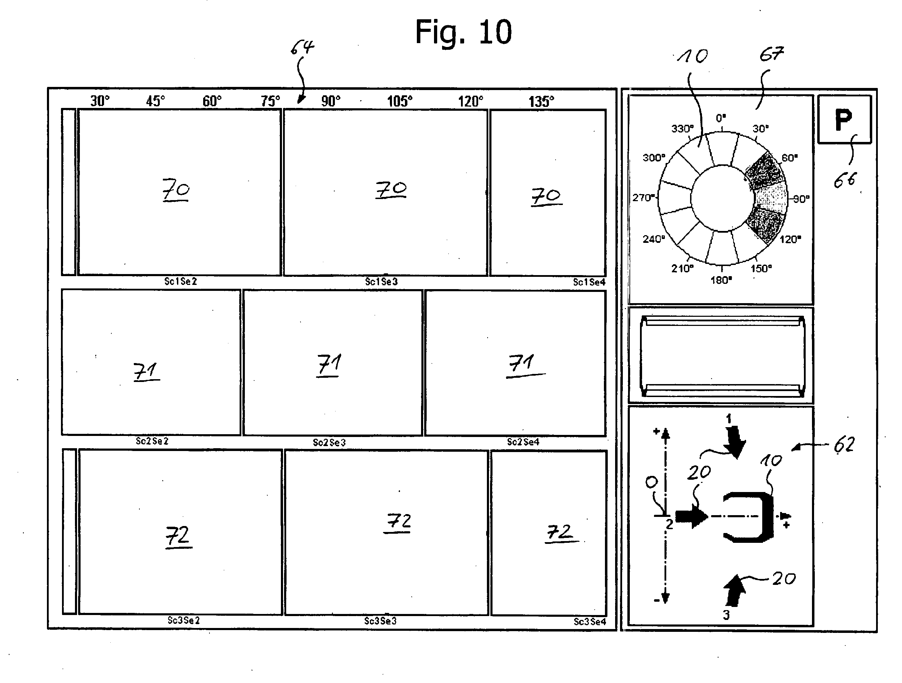

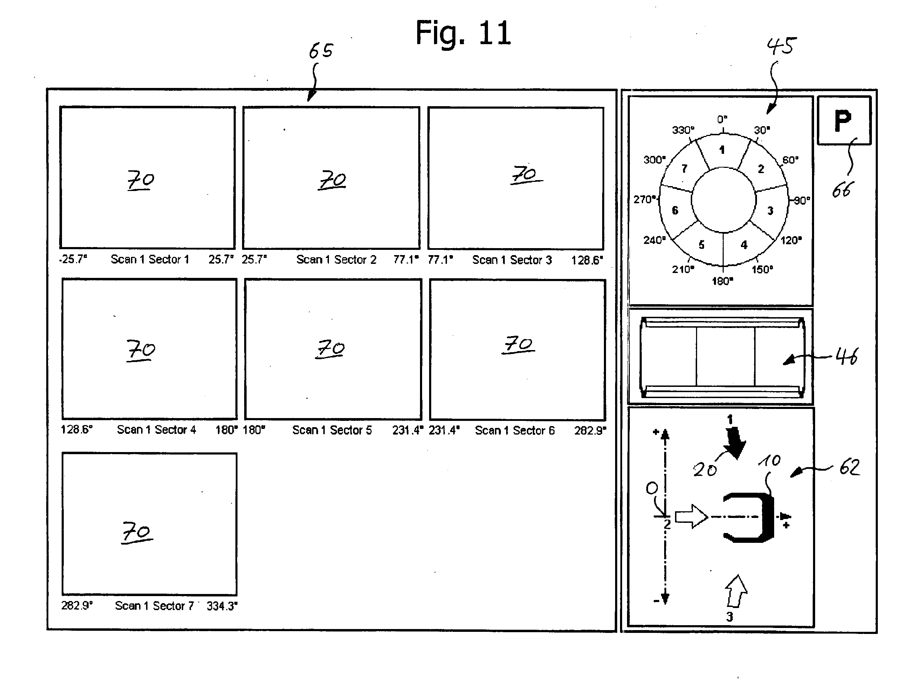

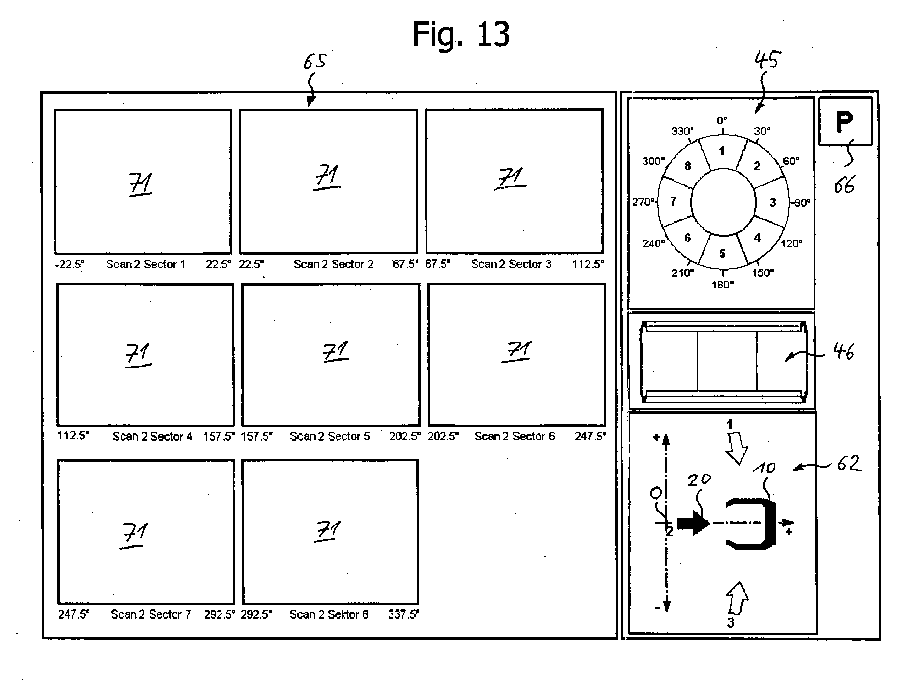

Die Benutzungsschnittstelle weist darüber hinaus ein Anzeigefeld 67 auf, mittels dem ähnlich zu dem Anzeigefeld 45 eine Draufsicht auf den Reifen 10 angezeigt wird. Im Unterschied zu dem Anzeigefeld 45 werden allerdings nicht die einen Messabschnitt betreffenden Sektoren, sondern eine Unterteilung des Reifens 10 in gleich große Abschnitte dargestellt. Das Anzeigefeld 67 ist zugleich ein Bedienfeld, das es ermöglicht, einen Ausschnitt, der einen oder mehrere dieser Abschnitte umfasst, auszuwählen, um ausschließlich die in diesem Ausschnitt befindlichen Sektoren in einem Anzeigefeld 64 anzuzeigen, wie in Fig. 10 zu erkennen ist. Je nach Anwendungsfall kann auch das Anzeigefeld 62 zugleich ein Bedienfeld sein, um einen einzelnen Scan auszuwählen und die den ausgewählten Scan betreffenden Ergebnisbilder 70, 71 in einem Anzeigefeld 65 anzuzeigen, wie in den Fig. 11 und 13 zu erkennen ist. Die Fig. 11 und 13 geben ferner zu erkennen, dass in diesem Fall der ausgewählte Scan in dem Anzeigefeld 62 hervorgehoben wird.

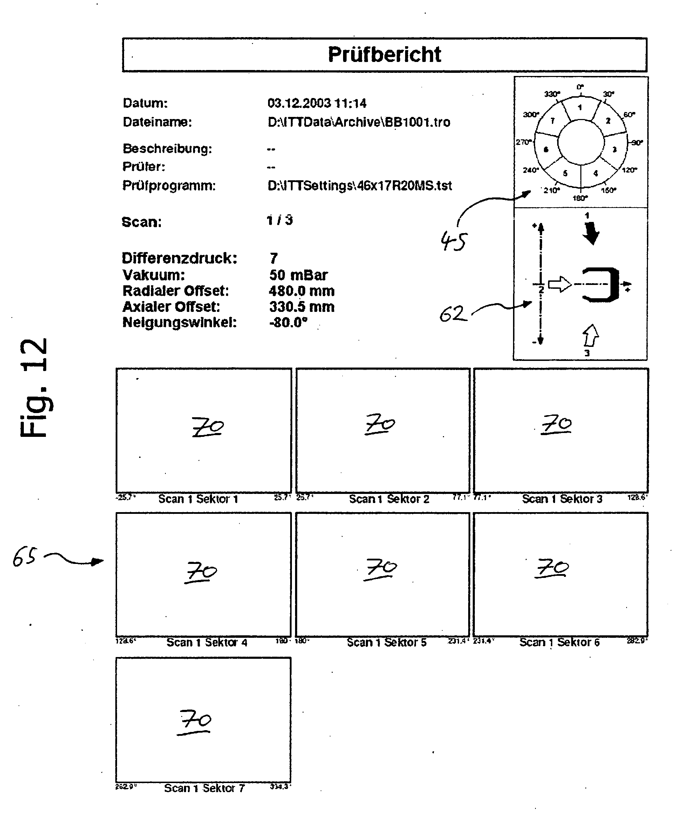

Die zweite Benutzungsschnittstelle der Steuer- und Anzeigeeinrichtung 40 weist ferner ein Bedienfeld 66 auf, das es ermöglicht, einen das Messergebnis protokollierenden und in Fig. 12 gezeigten Prüfbericht zu erzeugen. Der Prüfbericht beinhaltet die Darstellungen aus den Anzeigefeldern 45 und 62.

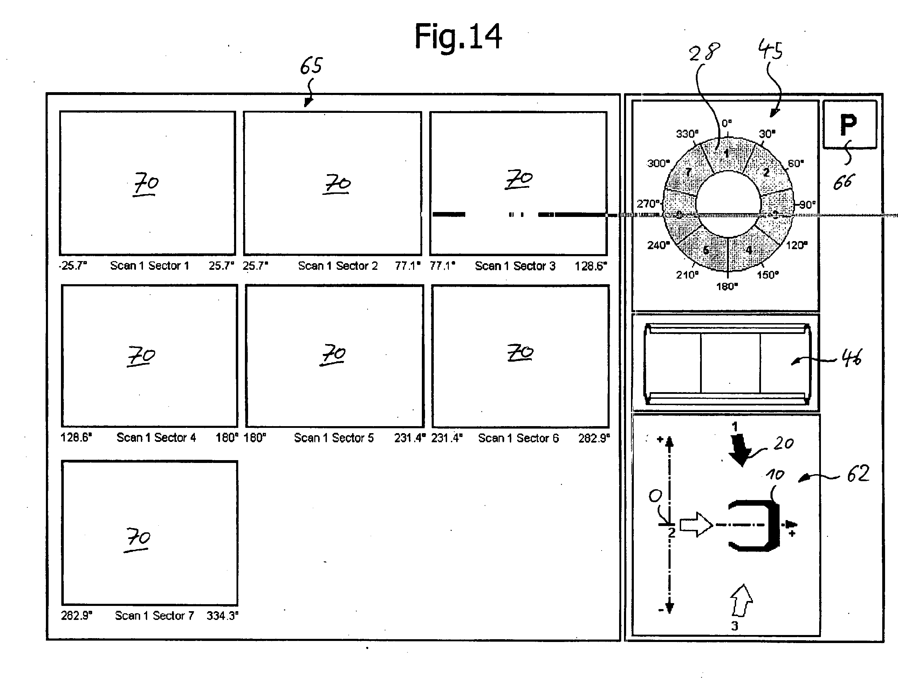

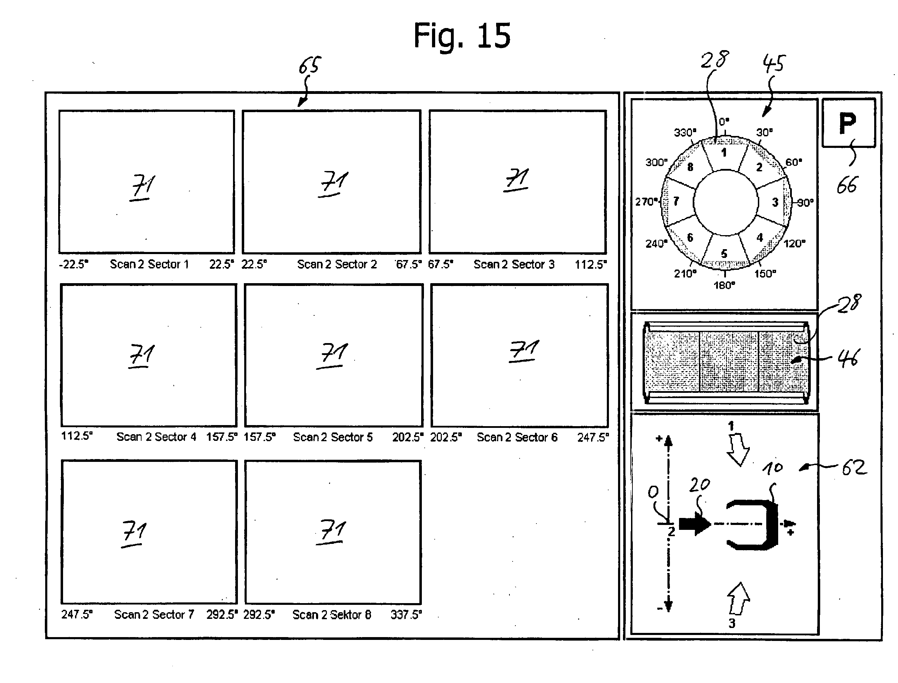

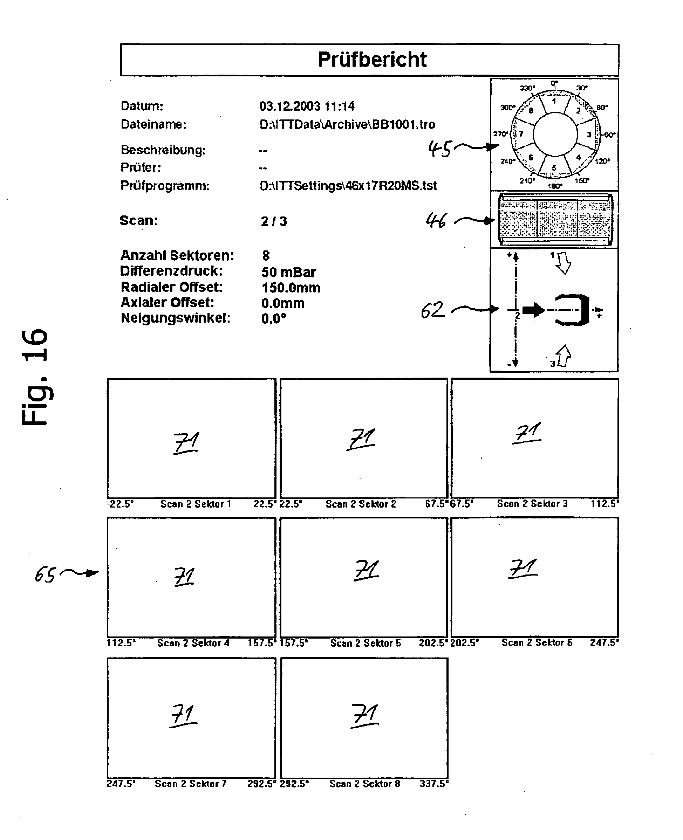

In einer alternativen Ausgestaltung der zweiten Benutzungsschnittstelle der Steuer- und Anzeigeeinrichtung 40 wird in den Anzeigefeldern 45, 46 zusätzlich das Gesichtsfeld 28 angezeigt, wie in den Fig. 14 bis 16 zu erkennen ist. In diesem Fall beinhaltet der Prüfbericht zusätzlich die Darstellung aus dem Anzeigefeld 46.

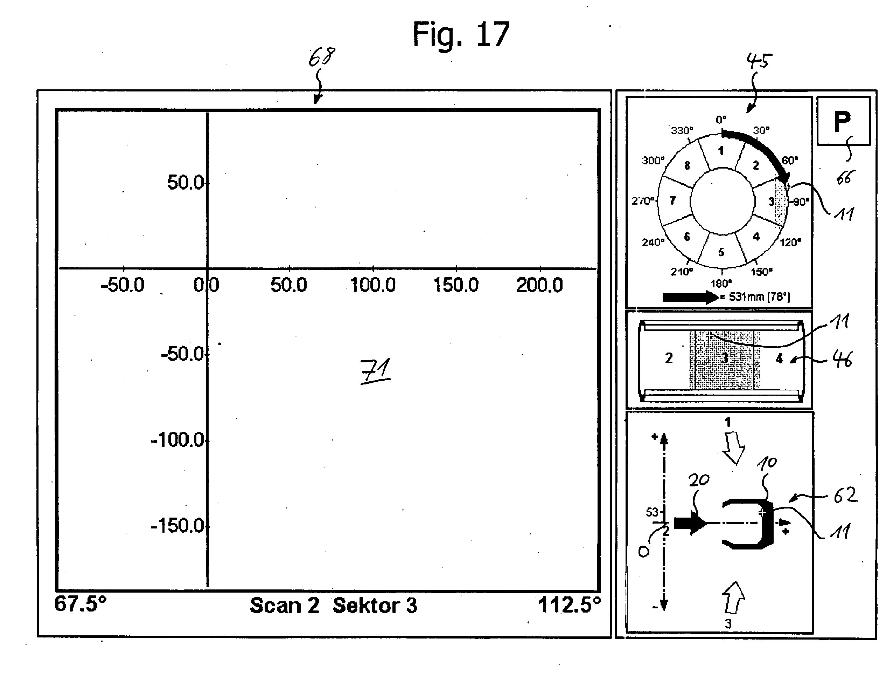

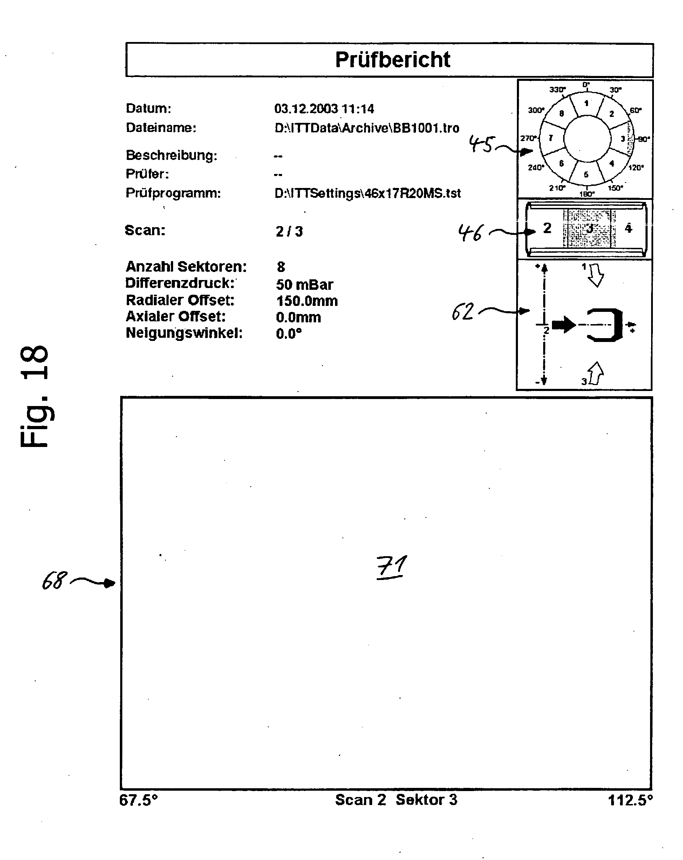

Eine dritte Benutzungsschnittstelle der Steuer- und Anzeigeeinrichtung 40 zeigt Fig. 17. Die Benutzungsschnittstelle weist in diesem Fall neben den Anzeigefeldern 45, 46 und 62 ein Anzeigefeld 68 auf, mittels dem das einem einzelnen Sektor zugeordnete Ergebnisbild angezeigt wird. Bei dem in Fig. 17 dargestellten Ausführungsbeispiel wird das während des zweiten Scans in dem dritten Sektor gewonnene Ergebnisbild 71 angezeigt. Der zugeordnete Scan und der betroffene Sektor werden zudem in den Anzeigefeldern 45, 46 und 62 dargestellt. In dem Anzeigefeld 68 wird ferner ein Fadenkreuz angezeigt, das sich frei in dem Anzeigefeld 68 positionieren lässt, so dass der Ursprung des Fadenkreuzes über eine Fehlstelle 11 gelegt werden kann, um die Lage der Fehlstelle 11 zu lokalisieren. In diesem Fall lässt sich zudem die Größe der Fehlstelle 11 mittels der Koordinatenachsen ablesen. Das Fadenkreuz und damit die Lage der Fehlstelle 11 wird zudem in den Anzeigefeldern 45, 46 und 62 angezeigt. In dem Anzeigefeld 45 wird überdies die Bogenlänge in Bezug auf den Außendurchmesser des Reifens 10 angezeigt, um welche die Fehlstelle 11 von der 0°-Position des Reifens 10, zum Beispiel der DOT-Nummer, entfernt ist. Die dritte Benutzungsschnittstelle der Steuer- und Anzeigeeinrichtung 40 ist darüber hinaus mit dem Bedienfeld 66 versehen, um einen in Fig. 18 dargestellten Prüfbericht zu erzeugen, der die Darstellungen aus den Anzeigefeldern 45, 46 und 62 beinhaltet und im Bedarfsfall auch die Lage der Fehlstelle 11 anzeigt.

Die zuvor beschriebenen Benutzungsschnittstellen der Steuer- und Anzeigeeinrichtung 40 sind zwar im beschriebenen Ausführungsbeispiel als graphische Bedienoberfläche ausgestaltet und bieten somit den Vorteil, dass sich die Anzeigefelder 44 bis 46, 48, 58 bis 65 und 67, 68 auf einfache Weise zugleich als Bedienfelder ausgestalten lassen, können aber je nach Anwendungsfall auch durch separate Anzeigen und Schalter realisiert werden. Unabhängig von der technischen Realisierung der Benutzungsschnittstelle gewährleistet die Steuer- und Anzeigeeinrichtung 40 eine einfache Steuerung des Messkopfs 20 und eine zuverlässige Auswertung des in Form der Ergebnisbilder 70, 71, 72 vorliegenden Messergebnisses.

### Bezugszeichenliste

- 10: Reifen
- 11: Fehlstelle
- 12: Lauffläche
- 13: Seitenwand
- 14: Seitenwand
- 15: Schulter

- 20: Messkopf
- 21: Kamera
- 22: Objektiv
- 23: Laserdiode
- 24: Objektiv
- 25: Strahlteiler
- 26: bewegbarer Spiegel
- 27: stationärer Spiegel
- 28: Gesichtsfeld
- 29: Gesichtswinkel

- 30: Positionierungsmittel
- 31: Verstelleinheit
- 32: Verstelleinheit
- 33: Verstelleinheit

- 40: Steuer- und Anzeigeeinrichtung
- 41: Rechner
- 42: Eingabegerät
- 43: Monitor
- 44: Anzeige- und Bedienfeld
- 45: Anzeige- und Bedienfeld
- 46: Anzeige- und Bedienfeld
- 47: Eingabefeld
- 48: Anzeige- und Bedienfeld
- 49: Anzeigefeld
- 50: Bedienfeld
- 51: Bedienfeld
- 52: Bedienfeld
- 53: Bedienfeld
- 54: Bedienfeld
- 55: Bedienfeld
- 56: Bedienfeld
- 57: Bedienfeld
- 58: Anzeige- und Bedienfeld
- 59: Anzeige- und Bedienfeld
- 60: Anzeige- und Bedienfeld
- 61: Anzeige- und Bedienfeld
- 62: Anzeige- und Bedienfeld
- 63: Anzeige- und Bedienfeld
- 64: Anzeige- und Bedienfeld
- 65: Anzeige- und Bedienfeld
- 66: Bedienfeld
- 67: Anzeige- und Bedienfeld
- 68: Anzeige- und Bedienfeld

- 70: Ergebnisbild
- 71: Ergebnisbild
- 72: Ergebnisbild

- 0: Ursprung des Koordinatensystems
- DOT: Herstellungsdatum (Department of Transportation)
- MBE: Maschinenbasisebene
- RME: Reifenmittenebene
- B: Breite des Reifens
- D: Durchmesser des Reifens
- H: Hauptpunkt
- M: Maulweite
- P: Parkposition
- R: Rotationsachse
- S: Schwenkachse
- a: axiale Verschiebung
- r: radiale Verschiebung
- x: horizontale Richtung
- y: horizontale Richtung
- z: vertikale Richtung
- α: Neigungswinkel
- ϕ: Drehwinkel

## Patentansprüche

1. Vorrichtung zum Prüfen eines Reifens (10) mittels eines interferometrischen Messverfahrens, umfassend:
einen Messkopf (20), der mit einer Kamera (21) versehen ist und ein Gesichtsfeld (28) hat und durch den der Reifen (10) zum Erzeugen eines Messergebnisses (70, 71, 72) abtastbar ist;
ein Positionierungsmittel (30), durch das der Messkopf (20) in einer Beobachtungsposition positionierbar und in einer Beobachtungsrichtung ausrichtbar ist, und
eine Steuer- und Anzeigeeinrichtung (40), durch die das Positionierungsmittel (30) steuerbar und das Messergebnis (70, 71, 72) anzeigbar sind;
**dadurch gekennzeichnet, dass** die Steuer- und Anzeigeeinrichtung (40) wenigstens ein Anzeigefeld (44, 45, 62) zum symbolischen anzeigen der Beobachtungsposition oder der Beobachtungsrichtung des Messkopfs (20) in Bezug auf den Reifen (10) aufweist.

2. Vorrichtung nach Anspruch 1, **dadurch gekennzeichnet, dass** in dem Anzeigefeld (44, 45) das Gesichtsfeld (28) oder ein das Gesichtsfeld (28) kennzeichnender Gesichtswinkel (29) in Bezug auf den Reifen (10) anzeigbar ist.

3. Vorrichtung nach Anspruch 1 oder 2, **gekennzeichnet durch** ein erstes Anzeigefeld (44) zum Anzeigen der Beobachtungsposition oder der Beobachtungsrichtung des Messkopfs (20) in Bezug auf einen Querschnitt **durch** den Reifen (10).

4. Vorrichtung nach einem der Ansprüche 1 bis 3, **gekennzeichnet durch** ein zweites Anzeigefeld (45) zum Anzeigen der Beobachtungsposition oder der Beobachtungsrichtung des Messkopfs (20) in Bezug auf eine Draufsicht auf den Reifen (10).

5. Vorrichtung nach einem der Ansprüche 2 bis 4, **dadurch gekennzeichnet, dass** die Steuer- und Anzeigeeinrichtung (40) ein drittes Anzeigefeld (46) zum Anzeigen des Gesichtsfelds (28) in Bezug auf ein Segment des Reifens (10) aufweist.

6. Vorrichtung nach einem der Ansprüche 1 bis 5, **dadurch gekennzeichnet, dass** die Steuer- und Anzeigeeinrichtung (40) ein Eingabefeld (47) zum Eingeben einer Anzahl an Sektoren, die den Reifen (10) in einzelne Messabschnitte gliedern, aufweist, wobei die Anzahl der Sektoren vorzugsweise in einem Anzeigefeld (48) anzeigbar ist, wobei vorzugsweise die Sektoren in dem zweiten Anzeigefeld (45) oder in dem dritten Anzeigefeld (46) anzeigbar sind und wobei vorzugsweise der Winkel, den die Sektoren einschließen, oder die dem Winkel entsprechende Bogenlänge in dem zweiten Anzeigefeld (45) oder in dem dritten Anzeigefeld (46) anzeigbar ist.

7. Vorrichtung nach einem der Ansprüche 1 bis 6, **dadurch gekennzeichnet, dass** das Messergebnis wenigstens ein Ergebnisbild (70, 71, 72) ist, wobei die Steuer- und Anzeigeeinrichtung (40) wenigstens ein Anzeigefeld (63, 64, 65, 68) zum Anzeigen des Ergebnisbildes (70, 71, 72) aufweist, wobei vorzugsweise ein Anzeigefeld (63, 65) zum Anzeigen wenigstens einer Serie an Ergebnisbildern (70, 71, 72) vorgesehen ist, die während einer vollständigen Rotation des Messkopfs (20) relativ zu dem Reifen (10) in den jeweiligen Sektoren gewonnen werden, wobei vorzugsweise ein Anzeigefeld (64) zum Anzeigen wenigstens einer Serie an Ergebnisbildern (70, 71, 72) vorgesehen ist, die in den jeweiligen Sektoren eines vorgegebenen Ausschnitts gewonnen werden, wobei vorzugsweise ein Anzeigefeld (67) zum Anzeigen des Ausschnitts in Bezug auf eine Draufsicht auf den Reifen (10) vorgesehen ist und wobei vorzugsweise die Steuer- und Anzeigeeinrichtung (40) wenigstens ein dem Ergebnisbild (70, 71, 72) zugeordnetes Anzeigefeld (62) zum Anzeigen der Beobachtungsposition oder der Beobachtungsrichtung, die der Messkopf (20) beim Erzeugen des Ergebnisbildes (70, 71, 72) hat, aufweist.

8. Vorrichtung nach einem der Ansprüche 1 bis 7, **dadurch gekennzeichnet, dass** in dem Anzeigefeld (45, 46, 62) die Position einer ermittelten Fehlstelle (11) des Reifens (10) anzeigbar ist.

9. Verfahren zum Prüfen eines Reifens (10) mittels eines interferometrischen Messverfahrens, umfassend die folgenden Verfahrensschritte:
ein Messkopf (20), der mit einer Kamera (21) versehen ist und ein Gesichtsfeld (28) hat, wird mittels eines Positionierungsmittels (30) in einer Beobachtungsposition positioniert und in einer Beobachtungsrichtung ausgerichtet;
der Reifen (10) wird mittels des Messkopfs (20) zum Erzeugen eines Messergebnisses (70, 71, 72) abgetastet und
mittels einer Steuer- und Anzeigeeinrichtung (40) wird das Positionierungsmittel (30) gesteuert und das Messergebnis (70, 71, 72) angezeigt;
**dadurch gekennzeichnet, dass** die Beobachtungsposition oder die Beobachtungsrichtung des Messkopfs (20) in Bezug auf den Reifen (10) mittels wenigstens eines Anzeigefelds (44, 45, 62) der Steuer- und Anzeigeeinrichtung (40) symbolisch angezeigt wird.

10. Verfahren nach Anspruch 9, **dadurch gekennzeichnet, dass** in dem Anzeigefeld (44, 45) das Gesichtsfeld (28) des Messkopfs (20) oder ein das Gesichtsfeld (28) kennzeichnender Gesichtswinkel (29) in Bezug auf den Reifen (10) angezeigt wird, wobei vorzugsweise in einem ersten Anzeigefeld (44) die Beobachtungsposition oder die Beobachtungsrichtung des Messkopfs (20) in Bezug auf einen Querschnitt durch den Reifen (10) angezeigt wird, wobei vorzugsweise in einem zweiten Anzeigefeld (45) die Beobachtungsposition oder die Beobachtungsrichtung des Messkopfs (20) in Bezug auf eine Draufsicht auf den Reifen (10) angezeigt wird und wobei vorzugsweise in einem dritten Anzeigefeld (46) der Steuer- und Anzeigeeinrichtung (40) das Gesichtsfeld (28) in Bezug auf ein Segment des Reifens (10) angezeigt wird.

11. Verfahren nach Anspruch 9 oder 10, **dadurch gekennzeichnet, dass** in ein Eingabefeld (47) der Steuer- und Anzeigeeinrichtung (40) eine Anzahl an Sektoren, die den Reifen (10) in einzelne Messabschnitte gliedern, eingegeben wird, wobei die Anzahl der Sektoren vorzugsweise in einem Anzeigefeld (48) angezeigt wird, wobei vorzugsweise die Sektoren in dem zweiten Anzeigefeld (45) oder in dem dritten Anzeigefeld (46) angezeigt werden und wobei vorzugsweise der Winkel, den die Sektoren einschließen, oder die dem Winkel entsprechende Bogenlänge in dem zweiten Anzeigefeld (45) oder in dem dritten Anzeigefeld (46) angezeigt wird.

12. Verfahren nach einem der Ansprüche 9 bis 11, **dadurch gekennzeichnet, dass** das Messergebnis durch wenigstens ein Ergebnisbild (70, 71, 72) dargestellt wird, wobei das Ergebnisbild (70, 71, 72) mittels wenigstens eines Anzeigefelds (63, 64, 65, 68) der Steuer- und Anzeigeeinrichtung (40) angezeigt wird, wobei vorzugsweise wenigstens eine Serie an Ergebnisbildern (70, 71, 72), die während einer vollständigen Rotation des Messkopfs (20) relativ zu dem Reifen (10) in den jeweiligen Sektoren gewonnen werden, mittels eines Anzeigefelds (63, 65) angezeigt wird, wobei vorzugsweise wenigstens eine Serie an Ergebnisbildern (70, 71, 72), die in den jeweiligen Sektoren eines vorgegebenen Ausschnitts gewonnen werden, mittels eines Anzeigefelds (64) angezeigt wird, wobei vorzugsweise der Ausschnitt in Bezug auf eine Draufsicht auf den Reifen (10) mittels eines Anzeigefelds (67) angezeigt wird und wobei vorzugsweise die Beobachtungsposition oder die Beobachtungsrichtung, die der Messkopf (20) beim Erzeugen des Ergebnisbildes (70, 71, 72) hat, mittels wenigstens eines dem Ergebnisbild (70, 71, 72) zugeordneten Anzeigefelds (62) der Steuer- und Anzeigeeinrichtung (40) angezeigt wird.

13. Verfahren nach einem der Ansprüche 9 bis 12, **dadurch gekennzeichnet, dass** in dem Anzeigefeld (45, 46, 62) die Position einer ermittelten Fehlstelle (11) des Reifens (10) angezeigt wird.

14. Verfahren nach einem der Ansprüche 9 bis 13, **dadurch gekennzeichnet, dass** ein das Messergebnis (70, 71, 72) protokollierender Prüfbericht mittels eines Bedienfelds (66) der Steuer- und Anzeigeeinrichtung (40) erzeugt wird, wobei vorzugsweise in einem das Messergebnis (70, 71, 72) protokollierenden Prüfbericht wenigstens ein Anzeigefeld (45, 46, 62) zum Anzeigen der Beobachtungsposition oder der Beobachtungsrichtung oder des Gesichtsfelds (28) oder des Gesichtswinkels (29) des Messkopfs (20) in Bezug auf den Reifen (10) abgebildet wird.

15. Prüfbericht zum Protokollieren eines durch das Verfahren nach einem der Ansprüche 9 bis 14 gewonnenen Messergebnisses (70, 71, 72), **gekennzeichnet durch** die Angabe der Beobachtungsposition oder der Beobachtungsrichtung oder des Gesichtsfelds (28) oder des Gesichtswinkels (29) des Messkopfs (20) in Bezug auf den Reifen (10).

## Claims

1. A device for testing a tyre (10) by means of interferometric scanning, comprising
a scanning head (20) provided with a camera (21) and having a field of view (28) by which the tyre (10) is scannable for generating a resulting scan (70, 71, 72);
a positioning means (30) by which the scanning head (20) can be positioned in a viewing position and can be oriented in a viewing direction, and
a control and display means (40) by which the positioning means (30) is controllable and the resulting scan (70, 71, 72) is displayable;
**characterized in that** the control and display means (40) includes at least one display field (44, 45, 62) for symbolically displaying the viewing position or the viewing direction of the scanning head (20) with respect to the tyre (10).

2. The device as set forth in claim 1, **characterized in that** the field of view (28) or an angle of view (29) characterizing the field of view (28) with respect to the tyre (10) is displayable in the display field (44, 45).

3. The device as set forth in the claims 1 or 2, **characterized by** a first display field (44) for displaying the viewing position or the viewing direction of the scanning head (20) with respect to a cross-section through the tyre (10).

4. The device as set forth in any of the claims 1 to 3, **characterized by** a second display field (45) for displaying the viewing position or viewing direction of the scanning head (20) with respect to the top-down view of the tyre (10).

5. The device as set forth in any of the claims 2 to 4, **characterized in that** the control and display means (40) includes a third display field (46) for displaying the field of view (28) with respect to a segment of the tyre (10).

6. The device as set forth in any of the claims 1 to 5, **characterized in that** the control and display means (40) includes an entry field (47) for entering a number of sectors sectioning the tyre (10) into discrete scan sections, the number of sectors preferably being displayable in a display field (48), the sectors preferably being displayable in the second display field (45) or in the third display field (46), and the angle including the sectors or the length of the arc corresponding to the angle preferably being displayable in the second display field (45) or in the third display field (46).

7. The device as set forth in any of the claims 1 to 6, **characterized in that** the resulting scan is at least one scan image (70, 71, 72), the control and display means (40) including at least one display field (63, 64, 65, 68) for displaying the scan image (70, 71, 72), a display field (63, 65) being preferably provided for displaying at least one series of scan images (70, 71, 72) obtained during a complete rotation of the scanning head (20) with respect to the tyre (10) in the corresponding sectors, a display field (64) being preferably provided for displaying at least one series of scan images (70, 71, 72) obtained in the corresponding sectors of a predefined detail, a display field (67) being preferably provided for displaying the detail with respect to a top-down view of the tyre (10), and the control and display means (40) preferably including at least a display field (62) assigned to the scan image (70, 71, 72) for displaying the viewing position or viewing direction which the scanning head (20) has in generating the scan image (70, 71, 72).

8. The device as set forth in any of the claims 1 to 7, **characterized in that** the location of a detected flaw (11) of the tyre (10) is displayable in the display field (45, 46, 62).

9. A method for testing a tyre (10) by means of interferometric scanning comprising the following steps:
positioning a scanning head (20) provided with a camera (21) and having a field of view (28) by means of a positioning means (30) in a viewing position and orienting it in a viewing direction;
scanning the tyre (10) by means of the scanning head (20) to produce a resulting scan (70, 71, 72) and
controlling the positioning means (30) and displaying the resulting scan (70, 71, 72) by means of a control and display means (40)
**characterized in that** the viewing position or the viewing direction of the scanning head (20) with respect to the tyre (10) is symbolically displayed by means of at least one display field (44, 45, 62) of the control and display means (40).

10. The method as set forth in claim 9, **characterized in that** the field of view (28) of the scanning head (20) or an angle of view (29) characterizing the field of view (28) is displayed with respect to the tyre (10) in the display field (44, 45), the viewing position or the viewing direction of the scanning head (20) being preferably displayed with respect to a cross-section through the tyre (10) in a first display field (44), the viewing position or the viewing direction of the scanning head (20) being preferably displayed with respect to a top-down view of the tyre (10) in a second display field (45), and the field of view (28) being preferably displayed with respect to a segment of the tyre (10) in a third display field (46) of the control and display means (40).

11. The method as set forth in claims 9 or 10, **characterized in that** a number of sectors sectioning the tyre (10) into discrete scan sections is entered in an entry field (47) of the control and display means (40), the number of sectors being preferably displayed in a display field (48), the sectors being preferably displayed in the second display field (45) or in the third display field (46), and the angle including the sectors or the length of the arc corresponding to the angle being preferably displayed in the second display field (45) or in the third display field (46).

12. The method as set forth in any of the claims 9 to 11, **characterized in that** the resulting scan is represented by at least one scan image (70, 71, 72), the scan image (70, 71, 72) being displayed by means of at least one display field (63, 64, 65, 68) of the control and display means (40), at least one series of scan images (70, 71, 72) obtained during a complete rotation of the scanning head (20) with respect to the tyre (10) in the corresponding sectors being preferably displayed by means of a display field (63, 65), at least one series of scan images (70, 71, 72) obtained in the corresponding sectors of a predefined detail being preferably displayed by means of a display field (64), the section with respect to a top-down view of the tyre (10) being preferably displayed by means of a display field (67), and the viewing position or the viewing direction, which the scanning head (20) has in generating the scan image (70, 71, 72), being preferably displayed by means of at least one display field (62) of the control and display means (40) assigned to the scan image (70, 71, 72).

13. The method as set forth in any of the claims 9 to 12, **characterized in that** the location of a detected flaw (11) of the tyre (10) is displayed in the display field (45, 46, 62).

14. The method as set forth in any of the claims 9 to 13, **characterized in that** a test report documenting the resulting scan (70, 71, 72) is generated by means of a user field (66) of the control and display means (40), at least one display field (45, 46, 62) for displaying the viewing position or the viewing direction or the field of view (28) or the angle of view (29) of the scanning head (20) with respect to the tyre (10) being preferably imaged in a test report documenting the resulting scan (70, 71, 72).

15. A test report for documenting a resulting scan (70, 71, 72) obtained by the method as set forth in any of the claims 9 to 14, **characterized by** documenting the viewing position or viewing direction or the field of view (28) or angle of view (29) of the scanning head (20) with respect to the tyre (10).

## Revendications

1. Dispositif pour contrôler un pneumatique (10) au moyen d'un procédé de mesure interférométrique, comprenant :
une tête de mesure (20), qui est pourvue d'une caméra (21) et
présente un champ de vision (28), au moyen de laquelle le pneumatique (10) peut être exploré pour engendrer un résultat de mesure (70, 71, 72) ;
un moyen de positionnement (30), au moyen duquel la tête de mesure (20) peut être positionnée dans une position d'observation et orientée dans une direction d'observation, et
une unité de commande et d'affichage (40), au moyen de laquelle il est possible de commander le moyen de positionnement (30) et il est possible d'afficher le résultat de mesure (70, 71, 72);
**caractérisé en ce que** l'unité de commande et d'affichage (40) comprend au moins un champ d'affichage (44, 45, 62) pour afficher de façon symbolique la position d'observation ou la direction d'observation de la tête de mesure (20) par référence au pneumatique (10).

2. Dispositif selon la revendication 1, **caractérisé en ce que** le champ de vision (28) ou un angle de vision (29) qui caractérise le champ de vision (28) peut être affiché dans le champ d'affichage (44, 45) par référence au pneumatique (10).

3. Dispositif selon la revendication 1 ou 2, **caractérisé par** un premier champ d'affichage (44) pour afficher la position d'observation ou la direction d'observation de la tête de mesure (20) par référence à une coupe transversale à travers le pneumatique (10).

4. Dispositif selon l'une des revendications 1 à 3, **caractérisé par** un second champ d'affichage (45) pour afficher la position d'observation ou la direction d'observation de la tête de mesure (20) par référence à une vue de dessus sur le pneumatique (10).

5. Dispositif selon l'une des revendications 2 à 4, **caractérisé en ce que** l'unité de commande et d'affichage (40) comprend un troisième champ d'affichage (46) pour afficher le champ de vision (28) par référence à un segment du pneumatique (10).

6. Dispositif selon l'une des revendications 1 à 5, **caractérisé en ce que** l'unité de commande et d'affichage (40) comprend un champ de saisie (47) pour la saisie d'un nombre de secteurs, qui subdivisent le pneumatique (10) en tronçons de mesure individuels, le nombre des secteurs pouvant de préférence être affiché dans un champ d'affichage (48), les secteurs pouvant être de préférence affichés dans le second champ d'affichage (45) ou dans le troisième champ d'affichage (46), et l'angle que les secteurs englobent, ou la longueur d'un arc correspondant à l'angle, peut de préférence être affiché(e) dans le second champ d'affichage (45) ou dans le troisième champ d'affichage (46).

7. Dispositif selon l'une des revendications 1 à 6, **caractérisé en ce que** le résultat de mesure est au moins une image de résultat (70, 71, 72), et l'unité de commande et d'affichage (40) comprend au moins un champ d'affichage (63, 64, 65, 68) pour afficher l'image de résultat (70, 71, 72), et il est prévu de préférence un champ d'affichage (63, 65) pour afficher au moins une série d'images de résultat (70, 71, 72) qui sont récupérées dans les secteurs respectifs pendant une rotation complète de la tête de mesure (20) par rapport au pneumatique (10), et il est de préférence prévu un champ d'affichage (64) pour afficher au moins une série d'images de résultat (70, 71, 72) qui sont récupérées dans les secteurs respectifs d'une portion prédéterminée, et il est de préférence prévu un champ d'affichage (67) pour afficher la portion par référence à une vue de dessus sur le pneumatique (10), et l'unité de commande et d'affichage (40) comprend de préférence au moins un champ d'affichage (62), associé à l'image de résultat (70, 71, 72), pour afficher la position d'observation ou la direction d'observation que présente la tête de mesure (20) lorsqu'elle engendre l'image de résultat (70, 71, 72).

8. Dispositif selon l'une des revendications 1 à 7, **caractérisé en ce qu'il est** possible d'afficher dans le champ d'affichage (45, 46, 62) la position d'un emplacement défectueux (11) déterminé du pneumatique (10).

9. Procédé pour contrôler un pneumatique (10) au moyen d'un procédé de mesure interférométrique, comprenant les étapes de procédé suivantes :
une tête de mesure (20), qui est pourvue d'une caméra (21) et
présente un champ de vision (28), est positionnée au moyen d'un moyen de positionnement (30) dans une position d'observation et est orientée dans une direction d'observation ;
le pneumatique (10) est exproré au moyen de la tête de mesure (20) pour générer un résultat de mesure (70, 71, 72), et
au moyen d'une unité de commande et d'affichage (40), on commande le moyen de positionnement (30) et on affiche le résultat de mesure (70, 71, 72) ;
**caractérisé en ce que** la position d'observation ou la direction d'observation de la tête de mesure (20) par référence au pneumatique (10) est affichée de façon symbolique au moyen d'au moins un champ d'affichage (44, 45, 62) de l'unité de commande et d'affichage (40).

10. Procédé selon la revendication 9, **caractérisé en ce que** l'on affiche dans le champ d'affichage (44, 45) le champ de vision (28) de la tête de mesure (20) ou un angle de vision (29) qui caractérise le champ de vision (28), par référence au pneumatique (10), de sorte que l'on affiche de préférence dans un premier champ d'affichage (44) la position d'observation ou la direction d'observation de la tête de mesure (20) par référence à une coupe transversale à travers le pneumatique (10), et on affiche de préférence dans un second champ d'affichage (45) la position d'observation ou la direction d'observation de la tête de mesure (20) par référence à une vue de dessus sur le pneumatique (10), et l'on affiche de préférence dans un troisième champ d'affichage (46) de l'unité de commande et d'affichage (40) le champ de vision (28) par référence à un segment du pneumatique (10).

11. Procédé selon la revendication 9 ou 10, **caractérisé en ce que** l'on saisit dans un champ de saisie (47) de l'unité de commande et d'affichage (40) un nombre de secteurs qui subdivisent le pneumatique (10) en tronçons de mesure individuels, le nombre des secteurs étant de préférence affiché dans un champ d'affichage (48), et l'on affiche de préférence les secteurs dans le second champ d'affichage (45) ou dans le troisième champ d'affichage (46), et l'on affiche de préférence l'angle que les secteurs englobent, ou la longueur d'un arc correspondant à l'angle dans le second champ d'affichage (45) ou dans le troisième champ d'affichage (46).

12. Procédé selon l'une des revendications 9 à 11, **caractérisé en ce que** le résultat de mesure est représenté par au moins une image de résultat (70, 71, 72), on affiche ladite image de résultat (70, 71, 72) au moyen d'au moins un champ d'affichage (63, 64, 65, 68) de l'unité de commande et d'affichage (40), et l'on affiche de préférence au moins une série d'images de résultat (70, 71, 72), qui ont été récupérées pendant une rotation complète la tête de mesure (20) par rapport au pneumatique (10) dans les secteurs respectifs, au moyen d'un champ d'affichage (63, 65), de sorte que l'on affiche de préférence au moins une série d'images de résultat (70, 71, 72), qui ont été récupérées dans les secteurs respectifs d'une portion prédéterminée, au moyen d'un champ d'affichage (64), et l'on affiche de préférence la portion par référence à une vue de dessus sur le pneumatique (10) au moyen d'un champ d'affichage (67), et l'on affiche ici de préférence la position d'observation ou la direction d'observation que présente la tête de mesure (20) lorsqu'elle génère l'image de résultat (70, 71, 72), au moyen d'au moins un champ d'affichage (62) associé à l'image de résultat (70, 71, 72) de l'unité de commande et d'affichage (40).

13. Procédé selon l'une des revendications 9 à 12, **caractérisé en ce que** l'on affiche dans le champ d'affichage (45, 46, 62) la position d'un emplacement défectueux (11) déterminé du pneumatique (10).

14. Procédé selon l'une des revendications 9 à 13, **caractérisé en ce que** l'on produit un rapport de contrôle qui établit le protocole du résultat de mesure (70, 71, 72), au moyen d'un champ de manipulation (66) de l'unité de commande et l'affichage (40), et l'on intègre de préférence dans un rapport de contrôle qui établit le protocole du résultat de mesure (70, 71, 72) l'image d'au moins un champ d'affichage (45, 46, 62) pour afficher la position d'observation ou la direction d'observation ou encore le champ de vision (28) ou l'angle de vision (29) de la tête de mesure (20) par référence au pneumatique (10).

15. Rapport de contrôle pour établir le protocole d'un résultat de mesure (70, 71, 72) obtenu au moyen du procédé selon l'une des revendications 9 à 14, **caractérisé en ce que** la position d'observation ou la direction d'observation, ou encore le champ de vision (28) ou l'angle de vision (29) de la tête de mesure (20) est indiqué par référence au pneumatique (10).
